# EUROPÄISCHE PATENTSCHRIFT

(11) **EP 1 987 081 B1**
(45) Veröffentlichungstag und Bekanntmachung des Hinweises auf die Patenterteilung: **12.09.2012**
(21) Anmeldenummer: 07712207.5
(22) Anmeldetag: 12.02.2007
(51) Int. Cl.: C08G 65/48, C08G 61/10, C08G 75/23, C08L 65/00, C08L 81/06, C08L 71/12, H01M 8/10, H01M 8/02, C08J 5/22, B01D 71/82

(54) **OLIGO- UND POLYMERE AROMATISCHE PHOSPHONSÄUREN, DEREN BLENDS, VERFAHREN ZU DEREN HERSTELLUNG UND ANWENDUNGEN ALS POLYELEKTROLYTE**
OLIGOMERIC AND POLYMERIC AROMATIC PHOSPHONIC ACIDS, THEIR BLENDS, PROCESSES FOR PREPARING THEM AND USES AS POLYELECTROLYTES
ACIDES PHOSPHONIQUES AROMATIQUES OLIGOMÈRES ET POLYMÈRES, LEURS MÉLANGES, PROCÉDÉ POUR LES PRÉPARER ET LEURS UTILISATIONS EN TANT QU'ÉLECTROLYTES

(30) Priorität: 16.02.2006 EP 06110069
(43) Veröffentlichungstag der Anmeldung: 05.11.2008
(73) Patentinhaber: BASF SE, 67056 Ludwigshafen (DE)
(72) Erfinder: MOEHWALD, Helmut, 76855 Annweiler (DE); BOCK, Thorsten, 79104 Freiburg (DE); MÜHLHAUPT, Rolf, 79117 Freiburg (DE)
(86) Internationale Anmeldenummer: PCT/EP2007/051343
(87) Internationale Veröffentlichungsnummer: WO 2007/093577

(56) Entgegenhaltungen:
- EP-A1- 1 354 907
- WO-A-2004/033079
- DE-A1- 10 355 619
- US-A- 3 748 306
- US-A1- 2004 210 007
- JAKOBY K., PEINEMANN K.V., NUNES S.P.: "Palladium-catalyzed phosphonation of polyphenylsulfone" MACROMOLECULAR CHEMISTRY AND PHYSICS, Bd. 204, Nr. 1, 2003, Seiten 61-67, XP002436242 in der Anmeldung erwähnt
- MIYATAKE K., HAY A.S.: "New Poly(arylene ether)s with pendant phosphonic acid groups" JOURNAL OF POLYMER SCIENCE: PART A: POLYMER CHEMISTRY, Bd. 39, 2001, Seiten 3770-3779, XP002436243 in der Anmeldung erwähnt
- ISSLEIB K., BALSZUWEIT A., KÖTZ J., RICHTER ST., LEUTLOFF R.: "Synthese von Aryl-bis(trimethylsilyl)-phosphonsäureeste rn via Tris-trimethylsilylphosphit- Ein Beitrag zur nickel-katalysierten Michaelis-Arbusov-Reaktion" ZEITSCHRIFT FÜR ANORGANISCHE ALLGEMEINE CHEMIE, Bd. 529, 1985, Seiten 151-156, XP002436244

## Beschreibung

Gegenstand dieser Erfindung ist ein Verfahren zur Herstellung von halogenfreien aromatischen Polyphosphonsäuren, die für den Einsatz in Polyelektrolytmembranen geeignet sind, halogenfreie, hochreine Polyphosphonsäuren, sowie Membranen, die hergestellt sind aus diesen hochreinen Polyphosphonsäuren.

Die Herstellung von polyaromatischen Verbindungen, deren wiederkehrende Monomereinheiten mit Phosphonsäureestern substituiert sind, kann durch direkte Copolymerisation von Phosphonsäure-Funktionen enthaltenden Monomeren mit weiteren Monomeren oder durch polymeranaloge Reaktionen zur Einführung der Phosphonsäure-Funktion erreicht,werden. Da in der Regel Phosphonsäuren und deren Derivate die Polykondensationsreaktionen bei der Synthese von Polyarylen, Polyaryletherketonen und Polyarylethersulfonen stark beeintrachtigen, wird die polymeranaloge Reaktion bevorzugt.

Die für niedermolekulare und polymere Substrate untersuchte Friedel-Kraft-analoge Umsetzung aktivierter Aromaten mit PCl₃ und Lewis-Säuren wie z.B. AlCl₃ zu aromatischen Phoshonigsäuredichloriden liefert nach Hydrolyse/Oxidation phosphonsaure Aromaten. Hierbei sind jedoch vernetzende Nebenreaktionen durch die Elektrophilie des primär gebildeten Phosphonigsäuredichlorids Ar-PCl₂ unvermeidlich. Entsprechende Verfahren werden in J. Org. Chem., 1961, 26, 284, Macromol. 1985, 18, 5, 829-835 oder US 3,748,306 offenbart. Zur Synthese gießtechnisch oder thermoplastisch verarbeitbarer Polymere ist dieses Verfahren aufgrund des gewissen Vernetzungsgrad ungeeignet.

J. Poly. Sc. Part A: Poly. Chem. 2004, 43(2), 273-286 beschreibt die Aktivierung niedermolekularer und polymerer aromatischer Substrate bezüglich halogenhaltiger Phosphorreagenzien durch metallorganische Reagenzien, durch z.B. Lithiierung des Aromaten. Die bei Umsetzung metallierter Polymere mit Phosphorsäuredialkylesterchloriden eingeführten Phosphonestergruppen sind jedoch ebenfalls zu nukleophilen Substitutionen mit metallierten Carbanionen befähigt. Dieser Umstand führt auch bei sorgfältiger Reaktionskontrolle ab Funktionalisierungsgraden von 50 mol-% zu durch vernetzende Nebenreaktionen unlöslichen Produkten. Die gewünschten hochfunktionalisierten Polyphosphonsäuren sind somit durch Metallierung-Phosphorylierung in gießtechnisch oder thermoplastisch verarbeitbarer Form nicht erhältlich.

Reaktionsbedingt vernetzungsfrei verlaufen die aromatischen Phosphorylierungen durch Palladium- und Nickel-Katalyse. Hierbei werden halogenierte aromatische Edukte mit Phosphorigsäuretrialkylestern an Pd(O), Pd(II), bzw. Ni(0) oder Ni(II) zu aromatischen Phosphonsäuredialkylestern umgesetzt. Beide Verfahren sind zur Synthese niedermoleklularer Phosphonaromaten aus Chem. Ber. 1970, 103, 2428-2436 und J. Org. Chem. 1980, 45, 5426-5429 bekannt, und wurden erst vor kurzer Zeit auf polymeranaloge Anwendbarkeit untersucht. Verfahren zur Palladium- und Nickel-katalysierten Phosphorylierung an Polymeren werden in Macromol. Chem. Phys. 2003, 204, 61- 67, J. Poly. Sci. A: Poly. Chem. 2001, 39, 3770-3779 und US 6,828,407 offenbart.

In J. Poly. Sci. A: Poly. Chem. 2001, 39, 3770-3779 wird offenbart, dass polymere Phosphonsäuredialkylester ohne Rückstände halogenierter Vorstufen Pd-katalytisch nur durch Einsatz halb-stöchiometrischer Mengen an Pd-Katalysator bezüglich umzusetzender Brommenge zugänglich sind.

Macromol. Chem. Phys. 2003, 204, 61- 67 offenbart, dass mit einem geringeren Katalysator/Brom-Verhältnis als 50 mol-% sich nur teilhalogenierte, unter Brennstoffzell-Bedingungen instabile Produkte erhalten lassen. So konnte mit 2,5 mol-% Pd-Katalysator aus dibromiertem Poly(phenylsülfon) RADEL^{®} R5000 nur monobromiertes Produkt mit einem Phosphorylierungsgrad von 88 mol-% hergestellt werden

Ein weiterer Nachteil der Pd- oder Ni-katalysierten Addition von Phosphonsäureestern ist, dass in einem weiteren separat durchzuführenden Esterspaltungschritt aus den Phosphonsäurdialkylestern die gewünschten Phosphonsäuren freigesetzt werden müssen.

Das in US 6,828,407 offenbarte Ni(II)-katalysierte Verfahren zur Gewinnung aromatischer Polyphosphonester setzt quantitative bis dreifach quantitative Katalysatormengen bezüglich umzusetzendem Bromgehalt in verschiedenen Amid-Lösungsmitteln ein. So lassen sich nach obiger Patentschrift aus dibromierten Poly(phenylsulfon) RADEL R5000 durch Reaktion in N,N-Dimethylformamid-Lösung mit Phosphorigsäurealkyestern ein Polymer mit Phosphorylierungsgrad von 137 mol-% und 16 mol-% Restbromgehalt gewinnen. Die Herstellung der aromatischen Polyphosphonester beschränkt sich auf Alkylester.

Die bei Nickel-katalysierter oxidativer Addition eines Phosphorigsäuretrialkylesters an einen Halogenaromaten abgespaltenen Halogenalkane sind in einer Michaelis-Arbuzov-Reaktion ebenfalls zur Reaktion mit dem Phosphorigsäuretrialkylester in der Lage, was zu Produktgemischen und einer verringerten Ausbeute führen kann, so offenbart in Chem. Ber. 1970, 103, 2428-2436 und Z. anorg. allgem. Chem., 529, 151-156, 1985. Eine solche Nebenreaktion wird durch den hier beschriebenen Einsatz silylierter Phosphor(III)-Komponenten effektiv unterbunden, da die hierbei abgespaltenen Silylphosphorhalogenide anders als Halogenalkane unter Reaktionsbedingungen inert sind.

Die Umsetzung erfolgt in N-haltigen Lösungsmitteln, ganz besonders bevorzugt N,N-Dimethylformamid bei Rückflusstemperaturen von 153 °C. Unter diesen Reaktionsbedingungen reagieren nur Bromgruppen an elektronenreichen Ethersegmenten. Die weniger reaktiven bromsubstituierten Ringe benachbart zur SO₂- oder CO-Gruppe werden nicht umgesetzt, weshalb nur aus solchen Ringen aufgebaute Polymere (z. B. ULTRASON^{®} E, Poly(4-sulfonylphenoxylen) sich nach diesen Verfahren nicht umsetzen lassen. Die Phosphorylierung von Polymeren mit silylierter Phosphorigsäure wie z.B. P(OSiMe₃)₃ ist für niedermolekulare Synthesen in Zeitschrift für anorganische und allgemeine Chemie, 529(10), 1985, 151-156 beschrieben, wurde aber für die Polymersynthese nicht eingesetzt.

Die nachträgliche Spaltung des erhaltenen polymeren Phosphonsäuredialkylesters durch Einsatz von Silylhalogeniden wie Trimethylsilyljodid wird in US 6,828,407 82 beschrieben, führt aber zu einem halogenhaltigen Gemisch aus silylierten Polyphosphonsäuren und Alkylhalogenid insbesondere Jodalkylen, die schwer abzutrennen sind und zu Verunreinigungen führen.

US 2004/210007 A1 offenbart Phosphonsäurederivate eines aromatischen Polymers, wobei Phosphonsäurederivate direkt an aromatische Ringe gebunden sind, ein Verfahren zu ihrer Herstellung und ihre Verwendung. In den genannten Verbindungen sind Phosphonsäuregruppen an aromatische Einheiten angebunden, welche nicht in Nachbarschaft zu -SO₂- oder -CO-Gruppen stehen.

Die aus der Literatur bekannten Verfahren zur polymeranalogen direkten Phosphorylierung aromatischer Systeme weisen verfahrensbedingte Nachteile hinsichtlich vernetzender Nebenreaktionen, Unvollständigkeit des Umsatzes, einzusetzender Katalysatormenge und Entfernung von Katalysatorrückständen auf. Des Weiteren bilden halogenhaltige Verunreinigungen und nicht umgesetzte Reste der Halogenaryl-Vorstufen bei Einsatz der Polymere als Membran in Brennstoffzellen mit Wasserstoff an Pt-Kontakten beim Betrieb der Brennstoffszelle Halogenwasserstoffe, die als starke Säuren die Korrosion der Zelle bewirken können. Zusätzlich sind nicht vorhersehbare Änderungen der Membraneigenschaften durch Dehydrohalogenierung möglich. z.B. Quellverhalten, mechanische Belastbarkeit.

Aufgabe der vorliegenden Erfindung ist es, halogenfreie, oligo- oder polymere aromatische Phosphonsäuren bereitzustellen. Des Weiteren ist es eine Aufgabe der vorliegenden Erfindung ein Verfahren zur Herstellung dieser halogenfreien, oligo- oder polymeren Phosphonsäuren bereitzustellen, welches die aus dem Stand der Technik bekannten Nachteile bezüglich vernetzender Nebenreaktionen, Vollständigkeit des Umsatzes, einzusetzender Katalysatormenge, halogenhaltiger Verunreinigungen, Entfernung von Katalysatorrückständen nicht aufweist. Des Weiteren soll die Menge an einzusetzendem Katalysator möglichst gering sein.

Weitere Aufgaben der vorliegenden Erfindung sind, oligo- und polymere silylierte aromatische Phosphonsäuren, aus denen ohne einen zusätzlichen, separat durchzuführenden Schritt der chemischen Phosphoresterspaltung die halogenfreien, oligo- oder polymeren Phosphonsäuren gebildet werden, sowie Blends beinhaltend diese oligo-und polymeren, aromatischen Phosphonsäuren, bereitzustellen.

Die genannten Aufgaben werden gelöst durch halogenfreie, oligo- oder polymere Phosphonsäuren aufgebaut aus Einheiten der allgemeinen Formel (I)

-[(O)ₘ-{R¹(X)ₙ(Y)ₒ}ₚR¹(X)_{q}]ᵣ-[(O)ₛ-R⁵(X)ₜ]ᵥ- (I),

mit den folgenden Bedeutungen:
- X: -P=O(OH)₂,
- Y: Carbonyl oder Sulfonyl,
- R¹, R⁵: unabhängig voneinander zwei- oder polyvalente, substituierte oder unsubstituierte, heteroatomfreie aromatische Reste,
- m, o, s: 0,
- n, q, t: unabhängig voneinander 0 oder ganze Zahlen von 1 bis 8, wobei n und s nicht gleichzeitig 0 sind,
- r, v: unabhängig voneinander 0 bis 1, wobei die Summe von r und v gleich 0,95 bis 1,05 ist, und
- p: 0 oder ganze Zahl ≥ 1,
wobei X Substituenten von R¹ und R⁵ sind, und Y Teile einer Polymer- oder Oligomerkette sind.

Im Rahmen der vorliegenden Erfindung bedeutet "halogenfrei" einen Gehalt an Halogenen von weniger als 1 Gew.-%, bevorzugt weniger als 0,5 Gew.-%, besonders bevorzugt weniger als 0,3 Gew.-%, jeweils bezogen auf die Masse phosphorylierten Produkts.

Bei diesen Verbindungen handelt es sich um aromatische oder semiaromatische Polymere, bei denen X und Y an aromatische Reste angebunden sind, wobei X ein Substituent der aromatischen Bereiche im Polymer ist und Y in der Polymerkette vorliegt.

Bei m = o = s = 0 handelt es sich um Phosphonsäurederivate von Homo- und Copolyarylenen. In einer bevorzugten Ausführungsform sind die oligo- und polymeren Verbindungen ausschließlich aus Einheiten der Formel (I) aufgebaut.

R¹ bedeutet bevorzugt aromatischer Rest ausgewählt aus der Gruppe bestehend aus 1,4-Phenylen, 1,3- Phenylen, 1,2-Phenylen, 1,6-Naphthylen, 2,4-Naphthylen, 3-Phenyl-1,4-arylen, 3-Alkyl-1,4-arylen, 2-Alkyl-1,4-arylen 2-Alkoxy-1,4-arylen, 3-Alkoxy-1,4-arylen, 2,6-dimethyl-1,4-phenylen, 2,3,5,6-tetramethyl-1,4-phenylen, 4,4'-biphenylen, 3,3'-diphenyl-4,4'-Biphenylen oder Arylenalkylen wie z.B. 2,2'-isopropyliden-bis(1,4-phenylen).

R⁵ kann, unabhängig von R¹, die gleichen Bedeutungen wie R¹ annehmen, bevorzugt bedeutet R⁵ Phenyl, 2,2'-isopropyliden-bis(1,4-phenylen) oder -biphenylen.

In einer weiteren bevorzugten Ausführungsform sind in der allgemeinen Formel (I) Y Sulfonyl und n 1.

In einer weiteren bevorzugten Ausführungsform ist in der allgemeinen Formel (I) Y Carbonyl.

In der allgemeinen Formel (I) sind m, o und s 0.

Die vorliegende Erfindung betrifft auch ein Verfahren zur Herstellung von halogenfreien, oligo- oder polymeren Phosphonsäuren aufgebaut aus Einheiten der allgemeinen Formel (I), umfassend die Schritte:
(a) Umsetzung von oligo- oder polymeren Verbindungen, aufgebaut aus Einheiten der allgemeinen Formel (II)

   -[(O)ₘ-{R¹(Y)ₒ}ₚR¹]ᵣ-[(O)ₛ-R⁵]ᵥ- (II),

   mit den folgenden Bedeutungen:
   - Y: Carbonyl oder Sulfonyl,
   - R¹, R⁵: unabhängig voneinander zwei- oder polyvalente, substituierte oder unsubstituierte, heteroatomfreie aromatische Reste,
   - m, o, s: 0,
   - r, v: unabhängig voneinander 0 bis 1, wobei die Summe von r und v 0,95 bis 1,05 ist, und
   - p: 0 oder ganze Zahl ≥ 1,
   wobei X Substituenten von R¹ und R⁵ sind, und Y Teile einer Polymer- oder Oligomerkette sind
   mit Halogenierungsmitteln bei einer Temperatur von -20 bis 140 °C in einem inerten Lösungsmittel, wobei halogenaromatische oligo- oder polymere Verbindungen aufgebaut aus Einheiten der der allgemeinen Formel (III)

   -[(O)ₘ-{R¹(Hal)ₙ(Y)ₒ}ₚR¹(Hal)_{q}]ᵣ-(O)ₛR⁵(Hal)ₜ]ᵥ- (III),

   mit den für die Einheiten der allgemeinen Formel (I) angegebenen Bedeutungen für R¹, R⁵, Y, m, n, o, p, q, r, s, t und v und Hal Halogen erhalten werden,
(b) Umsetzung der in Stufe (a) erhaltenen halogenaromatischen, oligo- oder polymeren Verbindungen aufgebaut aus Einheiten der allgemeinen Formel (III) in einem Stickstoff-freien Lösungsmittel oder einem Gemisch von Stickstoff-freien Lösungsmitteln mit O-silylierten Sauerstoffverbindungen des dreiwertigen Phosphors bei Temperaturen oberhalb von 100 °C in Gegenwart eines Katalysators enthaltend mindestens ein Metall aus der Platingruppe des Periodensystems der Elemente, wobei oligo- oder polymere, silylierte Polyphosphonsäuren aufgebaut aus Einheiten der allgemeinen Formel (IV)

   -[(O)ₘ-{R¹(Z)ₙ(Y)ₒ}ₚR¹ (Z)_{q}]ᵣ(O)ₛ-R⁵(Z)ₜ]ᵥ- (IV),

   mit den für die Einheiten der Formel (I) angegebenen Bedeutungen für R¹, R⁵, Y, m, n, o, p, q, r, s, t und v und Z -P(=O)(OSiR²R³R⁴)(OSiR⁶R⁷R⁸) mit R², R³, R⁴, R⁶, R⁷, R⁸ unabhängig voneinander einwertige Alkyl-, Alkenyl-, arylaliphatische, cycloaliphatische oder heterogruppenhaltige Alkylreste, erhalten werden und
(c) Umsetzung der in Schritt (b) erhaltenen oligo- oder polymeren, silylierten Phosphonsäuren aufgebaut aus Einheiten der allgemeinen Formel (IV) mit organischen Verbindungen, die azide Wasserstoffatome aufweisen, wobei halogenfreie, oligo- oder polymere Phosphonsäuren aufgebaut aus Einheiten der allgemeinen Formel (I)

   -[(O)ₘ-{R¹(X)ₙ(Y)ₒ}ₚR¹(X)_{q}]ᵣ-(O)ₛ-R⁵(X)ₜ]ᵥ- (I),

   erhalten werden.

Bei den Verbindungen aufgebaut aus Einheiten der allgemeinen Formel (IV) steht Z für eine silylierte, an einem aromatischen Rest angebundene Gruppierung P(=O)(OSiR²R³R⁴)(OSiR⁶R⁷R⁸), wobei R², R³, R⁴, R⁶, R⁷, R⁸ gleiche oder verschiedene gesättigte oder ungesättigte Alkylreste mit bis zu 20 C-Atomen oder Teil eines cycloaliphatischen Reste sein können.

In einer bevorzugten Ausführungsform sind R², R³, R⁴, R⁸, R⁷, R⁸ identische lineare oder verzweigte C₁ bis C₂₀ Alkyl-, Alkenyl und Aryl-Substituenten, insbesonders Methyl, Ethyl, n-Propyl, i-Propyl, n-Butyl, 1-(But-3-yenl), s-Butyl, t-Butyl, 1-Pentyl, t-Pentyl, 1-Hexyl, 1-Octyl, i-Octyl, t-Octyl, 2-Ethylhexyl, 1-Cyclooctyl, 1-Cycloheptyl, 1-Cyclohexyl, 1-Cylopentyl, 1-Methyl-Cylopentyl, 1-Methyl-Cyclohexyl, 1-Methyl-4-i-Propylcyclohexyl, Nonyl, Decyl, Undecyl, Dodecyl, Tridecyl, Tetradecyl, Pentadecyl, Hexadecyl, Heptadecyl, Octadecyl, Nonadecyl, Eicosyl, 1,4-Tetramethylen, -(CH₂CH₂)nOCH₃ mit n ganzzahlige Variable von 1 bis 100, bevorzugt 1 bis 10, besonders bevorzugt 1 bis 5.

In Schritt (a) des erfindungsgemäßen Verfahrens werden oligo- oder polymeren Verbindungen, aufgebaut aus Einheiten der allgemeinen Formel (II)

-[(O)ₘ-{R¹(Y)ₒ}ₚR¹]ᵣ-[(O)ₛ-R⁵]ᵥ- (II),

mit den für die Einheiten der allgemeinen Formel (I) angegebenen Bedeutungen für R¹, R⁵, Y, m, o, p, r, s und v mit geeigneten Halogenierungsmitteln bei einer Temperatur von -20 bis 140 °C in einem inerten Lösungsmittel, wobei halogenaromatische oligo-oder polymere Verbindungen der allgemeinen Formel (III)

-[(O)ₘ-{R¹(Hal)ₙ(Y)ₒ}ₚR¹(Hal)_{q}]ᵣ-(O)ₛ-R⁵(Hal)ₜ]ᵥ- (III),

mit den für die Einheiten der allgemeinen Formel (I) angegebenen Bedeutungen für R¹, R⁵, Y, m, n, o, p, q, r, s, t und v und Hal gleich Halogen, bevorzugt gleich Brom, erhalten werden.

Geeignete Verfahren zur Herstellung von Verbindungen aufgebaut aus Einheiten der allgemeinen Formel (II) sind dem Fachmann bekannt und beispielsweise in WO 2004/076530 beschrieben. Einige Verbindungen aufgebaut aus Einheiten der allgemeinen Formel (II) sind kommerziell erhältlich.

Geeignete inerte Lösungsmittel sind Alkylcarbonsäuren, chlorierte Kohlenwasserstoffe wie Methylenchlorid, Chloroform, Dichlorethan, Trichlorethan oder Tetrachlorethan, Schwefelsäure, insbesondere konzentrierte Schwefelsäure, und Alkyisulfonsäure wie Methan-, Ethan- und/oder Propansulfonsäure oder Mischungen daraus. Durch Einwirken geeigneter dem Fachmann bekannter Halogenierungsmittel, bevorzugt Bromierungsmittel wie elementares Brom, eine N-Bromverbindung wie N-Bromsuccinimid oder Dibromisocyarlursäure, werden die Verbindungen aufgebaut aus Einheiten der allgemeinen Formel (II) zu Verbindungen der allgemeinen Formel (III) umgesetzt.

Das Verfahren wird im Allgemeinen bei Atmosphärendruck durchgeführt.

Geeignete Verfahren zur Umsetzung der Verbindungen aufgebaut aus Einheiten der allgemeinen Formel (II) mit einem Halogenierungsmittel erfolgen entsprechend dem Fachmann bekannten Halogenierungsverfahren.

Für ein Polymer mit Y = SO₂ und v ungleich 0, beispielsweise Poly(sulfon) ULTRASON^{®} S werden zur Lösungsbildung im Allgemeinen chlorierte Kohlenwasserstoffe wie Methylenchlorid Chloroform, Dichlorethan, Trichlorethan oder Tetrachlorethan, vorzugsweise Chloroform verwendet. Das Polymer kann bevorzugt durch Zugabe von in einem inerten Lösungsmittel verdünnten elementaren Brom und Rühren bei Raum- bis Refluxtemperatur des Lösungsmittels bromiert werden. Der Bromierungsgrad kann hierbei durch Einstellen eines bestimmten molaren Brom-Polymer-Verhältnisses, die Reaktionstemperatur und durch die Reaktionsdauer kontrolliert werden. Zur Beendigung der Reaktion wird der Ansatz im Allgemeinen in einem Nichtlösungsmittel wie Aceton, Methanol, iso-Hexan oder Mischungen daraus gefällt, mechanisch zerkleinert und mit einem niederen aliphatischen Alkohol, vorzugsweise Methanol, besonders bevorzugt Methanol auf Kaliumhydroxid durch Extraktion für 20 bis 48 h, bevorzugt 12 bis 36 h, besonders bevorzugt für 24 h gereinigt.

Die Bromierung wird hier im Allgemeinen durch Zugabe einer bestimmten Menge einer N-Brom-Verbindung wie N-Bromsuccinimid oder Dibromoisocyanursäure (Monatshefte für Chemie, 99, 815-822, 1968) als Lösung im gleichen Lösungsmittel und Rühren der Mischung bei Temperaturen von 0 - 50 °C für den Zeitraum von 1 - 24 h erzielt. Zur Aufarbeitung wird der Ansatz in einem 2 - 20-fachen Überschuss destillierten Wasser gefällt, mechanisch zerkleinert und nach weiterem Waschen mit destillierten Wassers durch Extraktion mit einem niederen aliphatischen Alkohol, bevorzugt Methanol auf einer Base, bevorzugt auf Kaliumhydroxid für 12 - 48 h gereinigt.

Ist Y = CO, wie in dem Poly(etherketon) VICTREX^{®} 450 P, werden im Allgemeinen Lösungen durch Rühren des Polymers in Alkylsulfonsäüren, wie Methan-, Ethan-, und/oder Propansulfonsäure, vorzugsweise Methansulfonsäure bevorzugt bei erhöhter Temperatur von kleiner 100 °C, vorzugsweise 30 bis 80 °C hergestellt. Die Bromierung kann durch Zugabe einer bestimmten Menge einer N-Brom-Verbindung wie N-Bromsuccinimid oder Dibromoisocyanursäure als Lösung im gleichen Lösungsmittel, und Rühren bei Temperaturen von im Allgemeinen 0 - 100 °C für einen Zeitraum von im Allgemeinen 1 - 24 h erzielt werden. Zur Aufarbeitung wird der Ansatz im Allgemeinen in einem großen Überschuss, bevorzugt in dem 5- bis 100-fachen Überschuss, destillierten Wassers gefällt, mechanisch zerkleinert und nach weiterem Waschen mit im Allgemeinen großzügigen Mengen destillierten Wassers durch Extraktion z.B. mit einem niederen aliphatischen Alkohol, vorzugsweise Methanol über einer Base, bevorzugt über Kaliumhydroxid, für 12 - 48 h gereinigt.

Der erzielte Bromierungsgrad kann auf die konventionellen Weisen, wie über die Auswage, NMR und Elementaranalyse des C- oder Br-Anteils bestimmt werden.

In Schritt (b) des erfindungsgemäßen Verfahrens werden die halogenierten, oligo- oder polymeren Verbindungen der allgemeinen Formel (III) mit O-silylierten Sauerstoffverbindungen des dreiwertigen Phosphors bei Temperaturen oberhalb 100 °C, bevorzugt oberhalb 150 °C, an einem Katalysator enthaltend wenigstens ein Metall aus der Platingruppe des Periodensystems der Elemente in einem Stickstoff-freien Lösungsmittel oder einem Gemisch von Stickstoff-freien Lösungsmitteln, umgesetzt.

In einer bevorzugten Ausführungsform werden in dem erfindungsgemäßen Verfahren als silylierte Phosphorverbindung HP(OSiR²R³R⁴)₂ und/oder P(OSiR²R³R⁴)₃ eingesetzt. In Hinblick auf die allgemeine Formel (IV) ist in dieser bevorzugten Ausführungsform R² gleich R⁶, R³ gleich R⁷ und R⁴ gleich R⁸.

R², R³ und R⁴ sind einander gleiche oder unabhängige lineare oder verzweigte C₁ bis C₂₀ Alkyl-, Alkenyl und Aryl-Substituenten, bevorzugt Methyl, Ethyl, n-Propyl, i-Propyl, n-Butyl, 1-(But-3-yenl), s-Butyl, t-Butyl, 1-Pentyl, t-Pentyl, 1-Hexyl, 1-Octyl, i-Octyl, t-Octyl, 2-Ethylhexyl, 1-Cyclooctyl, 1-Cycloheptyl, 1-Cyclohexyl, 1-Cylopentyl, 1-Methyl-Cylopentyl, 1-Methyl-Cyclohexyl, 1-Methyl-4-i-Propylcyclohexyl, Nonyl, Decyl, Undecyl, Dodecyl, Tridecyl, Tetradecyl, Pentadecyl, Hexadecyl, Heptadecyl, Octadecyl, Nonadecyl, Eicosyl, Phenyl, Biphenyl, 1,4-Tetramethylen, -(CH₂CH₂)nOCH₃ mit n gleich ganzzahliger Variable von 1 bis 100, bevorzugt 1 bis 10.

Die silylierten Phosphor(III)-Sauerstoffverbindungen, insbesondere silylierte Phosphorigsäure und P(OSiR²R³R⁴)₃ sowie Mischungen von silylierten Sauerstoffverbindungen mit unterschiedlichen Silylresten, sind kommerziell erhältlich oder können hergestellt werden durch Silylierung der Phosphorigsäure mit einem oder mehreren Amino-, Halogen- oder Alkoxysilanen, welche die Gruppe SiR²R³R⁴ trägt.

Besonders bevorzugt wird Tris(trimethylsilyl)phosphit eingesetzt.

Die Umsetzung gemäß Schritt (b) des erfindungsgemäßen Verfahrens wird im Allgemeinen an einer Lösung des Polymers in organischen Stickstoff-freien Lösungsmitteln mit Siedepunkt > 100 °C, bevorzugt > 150 °C vorgenommen. Die vorzugsweise eingesetzten Lösungsmittel sind ausgewählt aus der Gruppe bestehend aus Diphenylether, Diphenylsulfon, Benzophenon und Mischungen davon, wobei der Vorzug dem Lösungsmittel mit der besten Lösekraft für das umzusetzende Polymer gegeben wird. Das Polymer-Anteil der Lösung liegt im Allgemeinen zwischen 3 und 90 Gew.-% mit Bevorzugung eines möglichst hohen Polymeranteiles, üblicherweise 70 Gew.-%.

Als Katalysatoren dienen in der polymeranalogen aromatischen Phosphonsilylierung in Schritt (b) der erfindungsgemäßen Verfahrens solche, die mindestens ein Metall aus der Platingruppe des Periodensystems der Elemente, z.B. Nickel, Palladium, Platin, Rhodium, Ruthenium, Osmium und/oder Iridium, enthalten. Bevorzugt enthält der eingesetzte Katalysator Nickel- und/oder Palladium-Verbindungen mit dem/den Metall(en) in den Oxidationstufen 0 bis +2.

Nickel kann als Ni(II)-Salz NiX₂ in Form der Halogenide (X = Cl, Br, I), bevorzugt X = Cl, der Pseudohalogenide, (X = CN, OCN, SCN) bevorzugt X = CN, der ß-Diketonate, bevorzugt X = Acetylacentonat oder Ni(0)-Verbindungen wie Ni[CO]₄, Ni[P(OR)₃]₄ mit R gleich einem linearen oder verzweigten C₁-C₂₀ Alkyl, vorzugsweise Ethyl (J. Org. Chem. 1980, 45, 5426-5429) eingesetzt werden.

Die angewandten Katalysatormengen betragen im Allgemeinen 0,01 - 1 molare Äquivalente der umzusetzenden molaren Brommenge, bevorzugt 0,01 - 0,1 Äquivalente, besonders bevorzugt 0,01 - 0,05 Äquivalente. Liegt das Nickel-Brom-Verhältnis unter 0,01, so ist ein vollständiger Bromumsatz nicht gesichert.

In den bevorzugten Ausführungsformen weist das Stickstoff-freie Lösungsmittel mit Nickel(II)-Chlorid keine Lichtabsorption bei Wellenlängen > 450 nm auf.

Die im Allgemeinen gemeinsam mit Nickel-Katalysatoren eingesetzten silylierten Phosphor(III)-Sauerstoffverbindungen, P(OSiR²R³R⁴)₃ mit identischen oder unterschiedlichen Substituenten R², R³, R⁴ ausgewählt aus linearem oder verzweigtem C₁ - C₂₀ Alkylen, Alkenylen, Arylen, bevorzugt R² = R³ = R⁴ = Methyl, werden im Allgemeinen in einem molaren Verhältnis 1,0 - 2,5 zu umzusetzender molarer Brommenge, vorzugsweise 1,25, verwendet.

In einer bevorzugten Ausführungsform wird das bromierte Polymer zur Phosphonylierung mit der berechneten Menge Nickel-Katalysator in einem ausreichend dimensionierten Reaktor vorgelegt und bei 120 bis 220 °C, bevorzugt bei 150 bis 210 °C, besonders bevorzugt bei 200 °C durch 2 - 4-stündiges Überleiten eines feinen Stickstoffstromes von Restfeuchte befreit. Dieser Gasstrom wird während der gesamten Reaktionsdauer beibehalten, um die Entfernung flüchtiger Reaktionsprodukte zu gewährleisten. Nach Zugabe der gewünschten Menge Lösungsmittel, vorzugsweise Benzophenon wird durch Rühren bei der oben angegebenen Temperatur eine orange bis hellbraune Lösung erzeugt. Zum homogenen Ansatz wird nun die silylierte Phosphorkomponente, vorzugsweise Tris(trimethylsilyl)phosphit, so zugetropft, dass die gesamte Menge in ca. 30 - 45 Minuten dem Ansatz zugeführt wird und dieser während der ganzen Zeit eine homogene Beschaffenheit aufweist. Tritt nach Beginn des Zutropfens nicht binnen 1-15 Minuten eine intensive Rot- oder Violettfärbung des Ansatzes auf, so wird die Reaktionstemperatur erhöht und die Temperaturerhöhung in 5 °C-Schritten weitergeführt, bis eine Farbänderung sichtbar wird. Ihr Erscheinen wird durch das Auftreten einer durch den N₂-Strom aus dem Reaktionsgefäß getragenen farblosen, an der Luft stark rauchenden Flüssigkeit begleitet. Nach 1 - 4 h wird das Reaktionsgemisch auf 170 °C temperiert und bei dieser Temperatur für weitere 4 - 12 h gehalten. Die Aufarbeitung des Reaktionsgemisches erfolgt nach dem Fachmann bekannten Methoden.

Wird Palladium als Katalysator eingesetzt, so können Pd(II)-Verbindungen wie Dichloro-bis(triphenylphosphin)-Palladium(II) oder Pd(0)-Verbindungen wie Tetrakis(triphenylphosphin)-Palladium oder Tris(dibenzylidenaceton)-Palladium-Chlorofom-Addukt in molaren Verhältnissen von im Allgemeinen 0,025 bis 0,5 bezüglich umzusetzender Brommenge angewandt werden.

Die im Allgemeinen gemeinsam mit Pd-Katalysatoren eingesetzten silylierten Phosphor(III)-Sauerstoffverbindungen HP(OSiR²R³R⁴)₂ mit gleichen oder unterschiedlichen Substituenten R², R³, R⁴ linearen oder verzweigten C₁-C₂₀ Alkylen, Alkenylen, Arylen, vorzugsweise R² = R³ = R⁴ = Methyl werden im molaren Verhältnis 1,2 - 2,5 zu umzusetzender molarer Brommenge, vorzugsweise 1,25 verwendet.

Durch katalytische Phosphonylierung von halogensubstituierten aromatischen und semiaromatischen Polymeren in Stickstoff-freien Lösungsmittel bei Temperaturen oberhalb von 100 °C, bevorzugt oberhalb 150 °C, besonders bevorzugt bei einer Temperatur von 151 bis 200 °C, können schon mit geringen Mengen Katalysator, bevorzugt Nickel- und/oder Palladium-Katalysator, besonders bevorzugt Tetrakis(triphenylphosphin)palladium, halogenfreie silylierte Phosphonsäuren erhalten werden, welche durch Zugabe von Lösungsmitteln mit azidem Wasserstoff halogen- und übergangsmetallfreie Phosphonsäuren bilden. Neben den Ringen der elektronenreichen Aromaten werden so auch Ringe der elektronenarmen Arylringe an der Y-Gruppe mit silylierter Phosphonsäure substituiert. Die erfindungsgemäßen silylierten Phosphonsäuren entstehen durch Reaktion einer halogenierten Vorstufe mit silylierter Phosphorigsäure P(OSiR²R³R⁴)₃ oder HP(OSiR²R³R⁴)₂ ohne reaktionsfähige Alkylhalogen-Nebenprodukte und unter Vermeidung von Resten unreagierter Arylhalogenide. Durch Behandlung der erhaltenen silylierter Polyphosphonsäure mit beispielsweise Alkoholen können freie Polyphosphonsäuren ohne Alkylhalogen-Verunreinigungen erhalten und im gleichen Verfahrensschnitt aufgereinigt werden (Schritt c)).

In Schritt (c) des erfindungsgemäßen Verfahrens werden die in Schritt (b) erhaltenen oligo- oder polymeren, silylierten Phosphonsäuren aufgebaut aus Einheiten der allgemeinen Formel (IV) mit organischen Verbindungen, die azide Wasserstoffatome aufweisen, umgesetzt, wobei halogenfreie, oligo- oder polymere Phosphonsäuren aufgebaut aus Einheiten der allgemeinen Formel (I)

-[(O)ₘ-{R¹(X)ₙ(Y)ₒ}ₚR¹(X)_{q}]ᵣ-[(O)ₛR⁵(X)ₜ]ᵥ- (I),

mit den zuvor genannten Bedeutungen für R¹, R⁵, X, Y, m, n, o, p, q, r, s, t und V erhalten werden.

Nach Beendigung der Reaktion gemäß Schritt (b) des erfindungsgemäßen Verfahrens wird der Ansatz im Allgemeinen in einem geeigneten niedrig siedenden Lösungsmittel, beispielsweise Tetrahydrofuran, aufgenommen und durch Fällung mit Wasser oder einer organischen Verbindung, die azide Wasserstoffatome aufweist, beispielsweise mit einem Alkohol, bevorzugt mit Methanol von Lösungsmittel, Reaktionsrückständen sowie Katalysator befreit und gleichzeitig der Silylester zur Phosphonsäure gespalten. Die hierzu eingesetzte Alkoholmenge beträgt üblicherweise das 3 - 20-fache Gewicht der umzusetzenden Menge der Verbindungen aufgebaut aus Einheiten der allgemeinen Formel (IV). Eine verbesserte Katalysatorabtrennung kann durch Ansäuern der Reaktionsmischung mit 0,1 - 5 Vol.-% einer starken Mineralsäure, vorzugsweise konzentrierte HCl, HBr oder verdünnte HNO₃, erzielt werden. Die organische Verbindung, die azide Wasserstoffatome aufweist, bevorzugt ein Alkohol, wird nach 30 - 120- minütigem Einwirken ausgetauscht und diese Prozedur 3 - 10-fach wiederholt. Eine Intensivierung des Reinigungs- und Esterspaltungsschritts, bevorzugt des Alkoholyseschrittes ist durch gleichzeitiges Einwirken von Ultraschall oder durch 12 - 48-stündige Soxhiet-Extraktion des Ansatzes mit schwach saurem Alkohol wie Methanol in Verbindung mit HCl, HBr oder HNO₃ möglich. Eine weitere Möglichkeit zur simultanen Reinigung - Esterspaltung besteht in wiederholtem Lösen und Fällung des Reaktionsproduktes in geeigneten Löse- und aziden Fäüungsmitteln. Beispiele für geeignete Lösungsmittel sind Essigsäuredimethylamid (DMAC), N-Methyl-2-pyrrolidinon (NMP), Dimethylformamid (DMF), Tetrahydrofuran (THF) oder Mischungen davon, geeignete Fällungsmittel sind beispielsweise Wasser, Methanol, Ethanol, iso-Propanol oder Mischungen davon. Die erhaltene, gereinigte polymere Phosphonsäure wird durch Trocknen bei 50-100 °C im Vakuum von Extraktionsmittel befreit.

In Schritt c) des erfindungsgemäßen Verfahrens werden bevorzugt mehr als 60%, besonders bevorzugt mehr als 70%, ganz besonders bevorzugt mehr als 80%, ganz besonders bevorzugt mehr als 90% der Silylester gespalten. Daher beinhaltet das Produkt nach Durchführung des Schritts c) bevorzugt mehr als 60%, besonders bevorzugt mehr als 70%, ganz besonders bevorzugt mehr als 80%, ganz besonders bevorzugt mehr als 90% Verbindungen aufgebaut aus Einheiten der allgemeinen Formel (I) und bevorzugt weniger als 40%, besonders bevorzugt weniger als 30%, ganz besonders bevorzugt weniger als 20%, ganz besonders bevorzugt weniger als 10% an Verbindungen der allgemeinen Formel (IV).

Die vorliegende Erfindung betrifft auch halogenfreie, oligo- oder polymere, silylierte Phosphonsäuren aufgebaut aus Einheiten der allgemeinen Formel (IV)

-[(O)ₘ-{R¹(Z)ₙ(Y)ₒ}ₚR¹(Z)_{q}]ᵣ-[(O)ₛ-R⁵(Z)ₜ]ᵥ- (IV),

mit den folgenden Bedeutungen:
- Z: -P(=O)(OSiR²R³R⁴)(OSiR⁶R⁷R⁸) mit R², R³, R⁴, R⁶, R⁷, R⁸ unabhängig voneinander einwertige Alkyl-, Alkenyl-, arylaliphatische, cycloaliphatische oder heterogruppenhaltige Alkylreste,
- Y: Carbonyl oder Sulfonyl,
- R¹, R⁵: unabhängig voneinander zwei- oder polyvalente, substituierte oder unsubstituierte, heteroatomfreie aromatische Reste,
- m, o, s: 0,
- n, q, t: unabhängig voneinander 0 oder ganze Zahlen von 1 bis 8, wobei n und s nicht gleichzeitig 0 sind,
- r, v: unabhängig voneinander 0 bis 1, wobei die Summe von r und v 0,95 bis 1,05 ist, und
- p: 0 oder ganze Zahl ≥ 1,
wobei Z Substituenten von R¹ und R⁵ sind, und Y Teile einer Polymer- oder Oligomerkette sind.

Im Rahmen der vorliegenden Erfindung bedeutet "halogenfrei" einen Gehalt an Halogenen von weniger als 1 Gew.-%, bevorzugt weniger als 0,5 Gew.-%, besonders bevorzugt weniger als 0,3 Gew.-%, jeweils bezogen auf die Masse des phosphorylierten Produkts.

Bei diesen Verbindungen handelt es sich um aromatische oder semiaromatische Polymere, bei denen Z und Y an aromatische Reste angebunden sind, wobei Z ein Substituent der aromatischen Bereiche im Polymer ist und Y in der Polymerkette vorliegt. Bei m = o = s = 0 handelt es sich um silylierte Phosphonsäurederivate von Homo-und Copolyarylen. In einer bevorzugten Ausführungsform sind die oligo- und polymeren Verbindungen ausschließlich aus Einheiten der Formel (IV) aufgebaut.

R¹ ist bevorzugt ausgewählt aus der Gruppe bestehend aus 1,4-Phenylen, 1,3-Phenylen, 1,2-Phenylen, 1,6-Naphthylen, 2,4-Naphthylen, 3-Phenyl-1,4-arylen, 3-Alkyl-1,4-arylen, 2-Alkyl-1,4-arylen 2-Alkoxy-1,4-arylen, 3-Alkoxy-1,4-arylen, 2,6-dimethyl-1,4-phenylen, 2,3,5,6-tetramethyl-1,4-phenylen, 4,4'-biphenylen, 3,3'-diphenyl-4,4'-Biphenylen oder Arylenalkylen wie z.B. 2,2'-isopropyliden-bis(1,4-phenylen).

R⁵ kann, unabhängig von R¹, die gleichen Bedeutungen wie R¹ annehmen, bevorzugt bedeutet R⁵ Phenyl, 2,2'-isopropyliden-bis(1,4-phenylen) und -biphenylen.

Bei den Verbindungen aufgebaut aus Einheiten der allgemeinen Formel (IV) steht Z für eine silylierte, an einem aromatischen Rest angebundene Phosphonsäure P(=O)(OSiR²R³R⁴)(OSiR⁶R⁷R⁸), wobei R², R³, R⁴, R⁶, R⁷, R⁸ gleiche oder verschiedene gesättigte oder ungesättigte Alkylreste mit bis zu 20 C-Atomen oder Teil eines cycloaliphatischen Reste sein können.

In einer bevorzugten Ausführungsform sind R², R³, R⁴, R⁶, R⁷, R⁸ identische lineare oder verzweigte C₁ bis C₂₀ Alkyl-, Alkenyl und Aryl-Substituenten, insbesonders Methyl, Ethyl, n-Propyl, i-Propyl, n-Butyl, 1-(But-3-yenl), s-Butyl, t-Butyl, 1-Pentyl, t-Pentyl, 1-Hexyl, 1-Octyl, i-Octyl, t-Octyl, 2-Ethylhexyl, 1-Cyclooctyl, 1-Cycloheptyl, 1-Cyclohexyl, 1-Cylopentyl, 1-Methyl-Cylopentyl, 1-Methyl-Cyclohexyl, 1-Methyl-4-i-Propylcyclohexyl, Nonyl, Decyl, Undecyl, Dodecyl, Tridecyl, Tetradecyl, Pentadecyl, Hexadecyl, Heptadecyl, Octadecyl, Nonadecyl, Eicosyl, 1,4-Tetramethylen, -(CH₂CH₂)nOCH₃ mit n ganzzahlige Variable von 1 bis 100, bevorzugt 1 bis 10, besonders bevorzugt 1 bis 5.

Die vorliegende Erfindung betrifft auch ein Verfahren zur Herstellung von halogenfreien, oligo- oder polymeren, silylierten Phosphonsäuren aufgebaut aus Einheiten der allgemeinen Formel (IV), umfassend die Schritte:
(a) Umsetzung von oligo- oder polymeren Verbindungen, aufgebaut aus Einheiten der allgemeinen Formel (II)

   -[(O)ₘ-{R¹(Y)ₒ}ₚR¹]ᵣ-[(O)ₛ-R⁵]ᵥ- (II),

   mit den folgenden Bedeutungen:
   - Y: Carbonyl oder Sulfonyl,
   - R¹, R⁵: unabhängig voneinander zwei- oder polyvalente, substituierte oder unsubstituierte, heteroatomfreie aromatische Reste,
   - m, o, s: 0, wobei n und s nicht gleichzeitig 0 sind,
   - r, v: unabhängig voneinander 0 bis 1, wobei die Summe von r und v 0,95 bis 1,05 ist, und
   - p: 0 oder ganze Zahl ≥ 1,
   wobei X Substituenten von R¹ und R⁵ sind, und Y Teile einer Polymer- oder Oligomerkette sind.
   mit Halogenierungsmitteln bei einer Temperatur von -20 bis 140 °C in einem inerten Lösungsmittel, wobei halogenaromatische oligo- oder polymere Verbindungen aufgebaut aus Einheiten der der allgemeinen Formel (III)

   -[(O)ₘ-{R¹(Hal)ₙ(Y)ₒ}ₚR¹(Hal)_{q}]ᵣ-(O)ₛ-R⁵(Hal)ₜ]ᵥ- (III),

   mit den für die Einheiten der allgemeinen Formel (I) angegebenen Bedeutungen für R¹, R⁵, Y, m, n, o, p, r, s, t und v und Hal Halogen erhalten werden und
(b) Umsetzung der in Stufe (a) erhaltenen halogenaromatischen, oligo- oder polymeren Verbindungen aufgebaut aus Einheiten der allgemeinen Formel (III) in einem Stickstoff-freien Lösungsmittel oder einem Gemisch von Stickstoff-freien Lösungsmitteln mit O-silylierten Sauerstoffverbindungen des dreiwertigen Phosphors bei Temperaturen oberhalb von 100 °C in Gegenwart eines Katalysators enthaltend ein Metall aus der Platingruppe des Periodensystems der Elemente, wobei oligo- oder polymere, silylierte Polyphosphonsäuren aufgebaut aus Einheiten der der allgemeinen Formel (IV)

   -[(O)ₘ-{R¹(Z)ₙ(Y)ₒ}ₚR¹(Z)_{q}]ᵣ-[(O)ₛ-R⁵(Z)ₜ]ᵥ- (IV)

   erhalten werden.

Die Schritte (a) und (b) dieses erfindungsgemäßen Verfahrens sind bereits zuvor erläutert worden.

Die vorliegende Erfindung betrifft auch halogenfreie Mischungen, enthaltend
(A) 0,1 bis 99,9 Gew.-% einer oder mehrerer Verbindungen aufgebaut aus Einheiten der allgemeinen Formel (I) und
(B) 0,1 bis 99,9 Gew.-% eines Stickstoff-freien Lösungsmittels mit einem Siedepunkt > 150 °C.

Bei diesen erfindungsgemäßen, halogenfreien Mischungen handelt es sich bevorzugt um solche Mischungen, enthaltend 0,1 bis 99,9 Gew.-%, besonders bevorzugt 40 bis 80 Gew.-% einer oder mehrere erfindungsgemäße Verbindungen der allgemeinen Formel (I) und 0,1 bis 99,9 Gew.-%, besonders bevorzugt 20 bis 60 Gew.-% eines Stickstoff-freien organischen Lösungsmittels oder Mischungen derselben mit Siedepunkt > 150 °C. Die Verbindungen aufgebaut aus Einheiten der allgemeinen Formel (I) können zu den oben erwähnten Anteilen in Mischung mit Verbindungen aufgebaut aus Einheiten der allgemeinen Formel (IV) vorliegen.

Die Lösungsmittel sind dieselben, die auch als Reaktionsmedium für die Phosphonylierungsreaktion eingesetzt werden. Bevorzugt sind Diphenylether, Benzophenon, Diphenylsulfon, die Methyl- Ethyl-, Propyl-, Butyl-, Methoxy- Ethoxy-, Propoxy-, Butoxysubstituierten Derivate dieser Verbindungen, aliphatische, teilaromatische und aromatische Oligo- und Polyether, aliphatische, teilaromatische und aromatische β-Diketone wie Acetylaceton, Acetylbenzophenon, 1,3-Diphenyl-Propan-1,3-dione sowie deren durch Alkyl-, Alkoxy-, Aryl und Aryloxy-Substitution hergeleiteten Derivate, aliphatische, teilaromatische und aromatische Ketoether und aliphatische, teilaromatische und aromatische Carbonsäureester und solche Carbonate sowie Mischungen aus obigen Substanzen.

Aus den erfindungsgemäßen halogenfreien Polymeren aufgebaut aus Einheiten der allgemeinen Formel (I) können Filme, Komposit- oder Verbundmaterialien hergestellt werden, welche bevorzugt als protonenleitende Membranen und Membran-Komponenten in Polymerelektrolyt-Brennstoffzellen dienen.

Die vorliegende Erfindung betrifft auch Filme, Komposit- oder Verbundmaterialien enthaltend wenigstens eine Verbindung aufgebaut aus Einheiten der allgemeinen Formel (I).

Die vorliegende Erfindung betrifft auch Polymerblends enthaltend wenigstens eine Verbindung aufgebaut aus Einheiten der allgemeinen Formel (I) und wenigstens ein weiteres Polymer.

Geeignete Blendpartner sind nicht-funktionalisierte Polymere. Unter dem Begriff "nicht-funktionalisiertes Polymer" werden im Rahmen der vorliegenden Erfindung solche Polymere verstanden, die weder perfluorierte und sulfonierte (ionomere) Polymere wie beispielsweise Nafion^{®} oder Flemion^{®} noch zum Erhalt einer ausreichenden Protonenleitfähigkeit mit geeigneten Gruppen wie beispielsweise -SO₃H-Gruppen oder -COOH-Gruppen funktionalisierte Polymere sind. Bezüglich dieser im Rahmen der vorliegenden Erfindung verwendbaren nicht-funktionalisierten Polymere exisitieren keinerlei besondere Beschränkungen, solange diese im Rahmen der Anwendungsbereiche, in denen die erfindungsgemäßen Polymersysteme eingesetzt werden, stabil sind. Werden gemäß einer bevorzugten Verwendung diese in Brennstoffzellen eingesetzt, so sind Polymere zu verwenden, die bis zu 100 °C und bevorzugt bis zu 200 °C oder höher thermisch stabil sind und eine möglichst hohe chemische Stabilität aufweisen. Vorzugsweise werden eingesetzt:
- Polymere mit aromatischem Backbone wie beispielsweise Polyimide, Polysulfone, Polyethersulfone wie beispielsweise Ultrason^{®},
- Polymere mit fluoriertem Backbone wie beispielsweise Teflon^{®} oder PVDF,
- Thermoplastische Polymere oder Copolymere wie beispielsweise Polycarbonate, wie beispielsweise Polyethylencarbonat, Polypropylencarbonat, Polybutadiencarbonat oder Polyvinylidencarbonat oder Polyurethane, wie sie unter anderem in der WO 98/44576 beschrieben sind,
- Vernetzte Polyvinylalkohole,
- Vinylpolymere wie
   - Polymere und Copolymere des Styrols oder Methylstyrols, Vinylchlorids, Acrylnitrils, Methacrylnitrils, N-Methylpyrrolidons, N-Vinylimidazols, Vinylacetats, Vinylidenfluorids,
   - Copolymere aus Vinylchlorid und Vinylidenchlorid, Vinylchlorid und Acrylnitril, Vinylidenfluorid und Hexafluorpropylen,
   - Terpolymere aus Vinylidenfluorid und Hexafluorpropylen sowie einer Verbindung aus der Gruppe bestehend aus Vinylfluorid, Tetrafluorethylen und Trifluorethylen. Derartige Polymere sind beispielsweise in der US 5,540,741 offenbart, deren diesbezüglicher Offenbarungsgehalt vollumfänglich in den Kontext der vorliegenden Anmeldung einbezogen wird;
- Phenol-Formaldehydharze, Polytrifluorstyrol, Poly-2,6-diphenyl-1,4-phenylenoxid, Polyarylethersulfone, Polyarylenethersulfone, phosphoniertes Poly-2,6-dimethyl-1,4-phenylenoxid.
- Homo-, Block- und Copolymere, hergestellt aus:
   - olefinischen Kohlenwasserstoffen wie beispielsweise Ethylen, Propylen, Butylen, Isobuten, Propen, Hexen oder höheren Homologen, Butadien, Cyclopenten, Cyclohexen, Norbornen, Vinylcyclohexan,
   - Acrylsäure oder Methacrylsäureestern wie beispielsweise Methyl-, Ethyl-, Propyl-, Isopropyl-, Butyl-, Isobutyl-, Hexyl-, Octyl-, Decyl-, Dodecyl-, 2-Ethylhexyl-, CycIohexyl-, Benzyl-, Trifluoromethyl-, oder Hexafluoropropylester oder Tetrafluoropropylacrylat oder Tetrafluoropropylmethacrylat,
   - Vinylethern wie beispielsweise Methyl-, Ethyl,- Propyl-, Isopropyl-, Butyl-, Isobutyl-, Hexyl-, Octyl-, Decyl-, Dodecyl-, 2-Ethylhexyl-, Cyclohexyl-, Benzyl-, Trifluoromethyl-, oder Hexafluoropropyl- oder Tetrafluoropropyl-Vinylether.
- basische, stickstoffhaltige Polymere wie Poly(p-Phenylquinoxalin), Poly(benzimidazole).

Sämtliche dieser nicht-funktionalisierten Polymere können prinzipiell in vernetzter oder unvernetzter Form eingesetzt werden. Es können auch Mischungen der genannten Polymere eingesetzt werden.

Besonders bevorzugt wird als Blendpartner ein Polymer eingesetzt, ausgewählt aus der Gruppe bestehend aus Poly(benzimidazol), Poly(p-phenylquinoxalin) oder Mischungen davon.

In den Polymerblends liegen zu 5 bis 95 Gew.-% Polymere der allgemeinen Formel (I) und zu 5 bis 95 Gew.-% wenigstens ein weiteres Polymer vor.

Die vorliegende Erfindung betrifft auch Membranen enthaltend wenigstens eine Verbindung aufgebaut aus Einheiten der allgemeinen Formel (I) oder wenigstens ein Polymerblend enthaltend wenigstens eine Verbindungen aufgebaut aus Einheiten der allgemeinen Formel (I) und basische stickstoffhaltige aromatische Polymere

Die vorliegende Erfindung betrifft auch die Verwendung einer Membran enthaltend wenigstens eine Verbindung aufgebaut aus Einheiten der allgemeinen Formel (I) oder wenigstens ein Polymerblend enthaltend wenigstens eine Verbindungen aufgebaut aus Einheiten der allgemeinen Formel (I) und basische stickstoffhaltige aromatische Polymere in Brennstoffzellen oder als Membranen für die Trenntechnik, bevorzugt als selektiv permeable Membranen in der Wasserentsalzung, Abwasser-Reinigung, Dialyse sowie in der Ionenextraktion und -retention.

Die vorliegende Erfindung betrifft auch die Verwendung mindestens einer Verbindung aufgebaut aus Einheiten der allgemeinen Formel (I) oder eines Polymerblends enthaltend wenigstens eine Verbindungen aufgebaut aus Einheiten der allgemeinen Formel (I) und basische stickstoffhaltige aromatische Polymere in Brennstoffzellen.

Die vorliegende Erfindung betrifft auch Brennstoffzellen enthaltend mindestens eine Verbindung aufgebaut aus Einheiten der allgemeinen Formel (I) oder eines Polymerblends enthaltend wenigstens eine Verbindungen aufgebaut aus Einheiten der allgemeinen Formel (I) und basische stickstoffhaltige aromatische Polymere.

Phosphonsaure Polyelektrolytmembranen aus den erfindungsgemäßen phosphonsauren aromatischen Polymeren werden im Allgemeinen durch Auflösen des phosphonsauren Polyelektrolyts in einem organischen Lösungsmittel, Aufziehen der bevorzugt gefilterten Lösung oder Mischung auf eine geeignete Oberfläche oder Imprägnierung eines Trägermaterials mit derselben und anschließende teilweise bis vollständige Verdampfung des Lösungsmittels hergestellt. Möglich ist auch die Zugabe von löslichen oder homogen dispergierbaren Additiven wie weiteren Polyelektrolyten, Stabilisatoren, Füllstoffen und Perogenen wie Poly(ethylenoxid), Poly(propylenoxid), Poly(vinylalkohol) zur bevorzugt gefilterten Polymerlösung und deren anschließende Verarbeitung zu einer Membran. Die Lösungsmittelwahl ist nur durch geeignete Lösekraft und Inertheit bezüglich des phosphonsauren aromatischen Polymers beschränkt und umfasst chlorierte Kohlenwasserstoffe wie Dichlormethan, Chloroform und Tertrachlorkohlenstoff, 1,2-Dichlorethan, Chlorbenzol und Dichlorbenzol, Ether wie Diethylether, Tetrahydrofuran, und Dioxan, die Alkylenglykolalkylether wie Ethylenglykolmethylether, Ethylenglykolethylether und Propylenglykolmethylether, Alkohole wie Methanol, Ethanol und Propanol, sowie die bevorzugt eingesetzten, aprotischen, polaren Flüssigkeiten vom Amid-Typ wie N,N-Dimethylformamid, N,N-Dimethylacetamid und N-Methylpyrrolidon, mit besonderer Präferenz von N-Methylpyrrolidon, sowie Mischungen dieser Lösungsmittel.

Eine Verbesserung der Löslichkeit besonders von hochfunktionalisierten phosphonsauren aromatischen Polymeren in organischen Lösungsmitteln kann z.B. durch Zugabe von 0,05 - 2 Vol.-% einer starken Säure zum Lösungsmittel erzielt werden, so lange dies die Bildung einer homogenen Lösung nicht behindert. Eingesetzte Säuren sind konzentrierte wässrige Halogenwasserstoff-Lösungen wie HCl oder HBr, oder konzentrierte Schwefel-, oder Salpetersäure oder starke organische Säuren wie Alkylsulfonsäuren und Trifluoressigsäure.

Zum Aufziehen der Polymerlösungen kommen als Oberflächen z.B. Glas, durch Silanisierung hydrophobisierte Gläser und Kunststofffolien, als Trägermaterialien Kunstoffnetze, poröse Kunststoffmembranen und andere zur Verstärkung, Flexibilisierung und Erhöhung der Zähigkeit geeignete Substrate in Frage.

Nach Applikation der Polymerlösung auf die wie oben beschriebene Oberfläche, bzw. Imprägnierung des wie oben beschriebenen Substrates wird das Lösungsmittel durch Verdampfen bei Temperaturen von im Allgemeinen 0 - 150 °C vollständig oder teilweise entfernt. Wird durch ausreichende Trockentemperatur und -dauer das Lösungsmittel weitestgehend entfernt, so wird im Allgemeinen eine homogene Membran ohne morphologische Strukturierung erhalten.

Die Restmenge des Lösungsmittels im Film kann durch die Wahl von Trockentemperatur und -zeit beeinflusst werden. Durch Eintauchen eines Restlösungsmittel-haltigen Filmes, bzw. Komposits in ein mit dem Polyelektrolyten unverträglichen, mit dem Lösungsmittel mischbaren Fällungsbad können oberflächenporöse, asymmetrische Membranmorphologien erzeugt werden. Die Ausprägung und Morphologie der dadurch erzeugten porösen Strukturierung kann durch den Restlösungsmittelgehalt, Wahl des Fällungsbades und dessen Temperatur beeinflusst werden.

Die erzeugten Membranstrukturen können zur Erhöhung der zur Ionenaufnahme oder der Kontaktierung der Membran mit einer Elektrodenschicht nötigen Oberfläche, sowie als Mikrohohlräume zur Abscheidung von die Protonenleitung positiv beeinflussender polymere oder niedermolekulare Substanzen, wie saure Polyelektrolyten oder Zirkon(IV)phosphate, - phosphonate und Zirkon(IV)sulfonphosphonate, die Wasserretention bei erhöhter Temperatur fördernder Silikate oder sauer funktionalisierter Silikate, eingesetzt werden, solange die chemische und mechanische Beständigkeit, Flexibiliät und Trennleistung der Membran nicht negativ beeinflusst werden.

Die Dicke der erzeugten Membran lässt sich durch die Konzentration der eingesetzten Polymerelektrolyt-Lösung, Schichtdicke der aufgetragenen Polymerlösung, sowie Dicke des eingesetzten Trägermaterials beeinflussen, wobei eine möglichst dünne Membran zur Erhöhung der Protonenleitfähigkeit bevorzugt wird. Eine bevorzugte Membrandicke für die Anwendung als Brennstoffzellmembran ist 1 - 200 µm und wird so gewählt, dass eine möglichst hohe Protonenleitfähigkeit bei angemessener mechanischen Belastbarkeit und Diffusionsbarrierewirkung resultiert.

Ein weiterer Anwendungszweck der erfindungsgemäßen phosphonsauren Polyelektrolyte ist die Quellungsminderung aromatischer Polyphosphonsäure- und Polyelektrolyt-Polyphosphonsäure-Blend-Membranen via ionisch vernetzende in-situ Bildung von Zirkon(IV)-Polyphosphonaten durch Einwirken von Zr(IV)-Salz-Lösungen auf solche Membranen. Die erfindungsgemäßen Polyelektrolyte können ebenfalls als nicht migrationsfähige, polyphosphonsaure Komponente in Blendmembranen mit basischen stickstoffhaltigen aromatischen Polymeren wie Poly(benzimidazol) oder Poly(p-Phenylquinoxalin) dienen.

Weitere Anwendungen der erfindungsgemäßen phosphonsauren Polyelektrolyte sind eine Kontaktvermittelung, oder -verbesserung zwischen Apatitoberflächen von Zähnen bzw. Knochen und Kunststoff- oder Metallimplantaten. Hierbei kann das polyphosphonsaure Material in Reinform, als Mischung mit verschiedenen Additiven und als eigenschaflsveressernder Blendbestandteil zur Anwendung kommen.

Die erfindungsgemäßen Polyphosphonsäuren können des Weiteren als korrosionhemmende Metallbeschichtungen dienen, oder als haftvermittelnde Schicht zwischen Metalloberfläche und weiteren Materialien dienen.

### Beispiele:

Die Abkürzung dsBr bedeutet "degree of substitution with bromine" = Bromierungsgrad

### Beispiel 1: Herstellung eines phosphonsauren Poly(elektrolyts) auf Basis von Poly (sulfon) ULTRASON^{®} S

### Herstellung der bromierten Vorstufe

100g (225,97 mmol Bisphenol-A-Einheiten) Poly(sulfon) ULTRASON^{®} S (BASF AG), fortan als P1 bezeichnet, werden in einem 1000 ml Dreihalskolben mit Rückflusskühlung, Tropftrichter und Rührwerk in einem auf 70 °C temperierten Ölbad in 20 Minuten durch Rühren in 400 ml Chloroform aufgelöst. Zur erhaltenen schwach beigen und leicht opaquen Lösung wird eine Lösung von 58 g (362,7 mmol) Brom in 100 mol Chloroform unter schnellem Rühren zulaufen gelassen. Der intensiv rot-braune, homogene Ansatz wird bei 70 °C weitergerührt und die entwickelte HBr durch Einleiten in KOH-Lauge abgefangen.

Nach 3 h wird der Ansatz durch rasches Eingießen in stark gerührte 2,5 I einer 4:1 (v/v) Mischung Methanol/Aceton bei 20 °C gefällt. Nach 5 Minuten Rühren wird das Fällungsmittel dekantiert, durch 1,5 I einer gleichen Mischung ersetzt und darin das Polymer mechanisch zerkleinert.

Die erhaltenen weißen Flocken werden durch 24-stündige Soxhlet-Extraktion mit reinem Methanol über KOH gereinigt und anschließend für 24 h im Vakuum bei 100 °C getrocknet.

Das erhaltene Produkt wird fortan als br-P1 bezeichnet.

| | |
|---|---|
| Auswage: | 118,3 g |

Aus der Massezunahme errechnet sich ein Bromierungsgrad dsBr = 103 mol-%, entsprechend 1,03 Bromatome je Bisphenol-A-Einheit.

**Elementaranalyse:**

| | | |
|---|---|---|
| C : | 62,2% (ber.) | 61,95% (gef.) |
| H: | 4,08% (ber.) | 4,10 (gef.) |
| S: | 6,20% (ber.) | 6,19% (gef.) |

Mit dsBr = 410,5943/w(C)-5,6082 folgt dsBr= 102 mol-%, entsprechend 1,02 Bromatome je Bisphenol-A-Einheit.

**1 H-NMR-Spektrum (300 MHz, CDCl3):**

| | |
|---|---|
| 1,69 ppm, | Integralwert = 1 (i-Propyliden-H) |
| 6,94 - 7,87 ppm, | Integralwert = 2,83 (Ar-H) |

### Herstellung des phosphonsauren Polymers pho-P1.1

10 g der bromierten Vorstufe br-P1 (19,63 mmol Brom) werden mit 250 mg (1,96 mmol) wasserfreiem Ni(II)chlorid in einen 250 ml Dreihalskolben mit Rührwerk, offenem Luftkühler und septumverschlossenen Tropftrichter mit Stickstoffeinleitung gegeben. In einem auf 190 °C temperierten Ölbad wird der Ansatz durch Einleitung eines schwachen Stickstoffstromes von Restfeuchte befreit. Zum trockenen Ansatz werden unter N2-Gegenstrom 3 g Benzophenon zugegeben und das Polymer unter Rühren über 1 h zu einer homogen, hochviskosen, hell beigen Lösung verarbeitet. Nachdem die Ölbadtemperatur auf 200 °C erhöht worden ist, wird über das Septum 7,33 g (24, 54 mmol) Tris(trimethylsilyl)phosphit in den Tropftrichter gegeben und diese unter Rühren über 30 Minuten dem Ansatz zugefügt. Ungefähr 2 Minuten nach Start der Zugabe wird eine Farbänderung über Purpur nach Dunkelblau beobachtet und durch den N2-Strom eine an der Luft stark rauchende wasserklare Flüssigkeit in eine Kühlfalle abgetrieben. Im Verlauf der nächsten 4 h wurden ca. 4 ml dieser Flüssigkeit in der Kühlfalle kondensiert, während am Reaktionsansatz eine Farbvertiefung und Viskositätserhöhung sichtlich wurde. Das Rührwerk wurde abgeschaltet und der Ansatz für 8 h auf 170 °C temperiert. Nach Abkühlen auf Raumtemperatur wird unter N2-Gegenstrom eine Probe entnommen und diese unter Luft- und Feuchtigkeitsausschluss durch Ultraschallbehandlung mit dreimal jeweils 10 ml, absolutiertem iso-Hexan von Benzophenon, Trimethylsilylbromid- und Tris(trimethylsilyl)phosphit-Resten befreit. Von der nach Entfernen des Extraktionsmittels durch Trocknen im Stickstoffstrom bei 100 °C erhaltenen beigen Probe, im folgenden als phoSi-P1 bezeichnet, wird ein 1H-NMR-Spektrum in Tetramethylsilan-freiem d6-Dimethylsulfoxid aufgenommen.

Der restliche Ansatz wird durch Ultraschallbehandlung mit 250 ml einer 100:2 (v/v) Mischung Methanol / Salzsäure-Mischung von Benzophenon befreit und gleichzeitig die Phosphonsäure durch alkoholytische Spalterng des Silylesters freigesetzt. Das erhaltene zäh pastöse Produkt wird mechanisch zerkleinert und 12 h mit Methanol über KOH soxlethiert. Nach Trocknen im Vakuum bei 75 °C wird ein kompaktes, hellbeiges Material erhalten. Dieses erweist sich als leicht-löslich in warmen N-Methyl-Pyrrolidon, wobei eine hell-beige, auffallend viskose Lösung gebildet wird. Bei Zugabe einiger Tropfen einer 1-% (m/m) Zr(Acetylacetonat)4-N-Methyl-Pyrrolidon-Lösung konnte ein in Dimethylsulfoxid, N,N-Dimethylformamid, N,N-Dimethylacetamid, und Trifluoressigsäure unlöslicher weißlicher Niederschlag von Zr(IV)-Polyphopshonsäure gefällt werden. Eine entsprechende Fällung kann an N-Methylpyrrolidon-Lösungen von P1 und br-P1 nicht festgestellt werden.

Vom erhaltenen Produkt, welches folgend als pho-P1 bezeichnet wird, wird ein 1 H- und 31 P-NMR-Spektrum in Tetramethylsilan-freiem d6-Dimethylsulfoxid aufgenommen.

| | |
|---|---|
| Auswage : | 9,30 g |

### Bromgehaltbestimmung:

Oxidativer Aufschluss pho-P1 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

### thermogravimetrische Analyse phoP1:

Netzsch STA 409, Heizrate, 10 K/min, Luft-Atmosphäre:
5 Gew.-% Verlust bei 220 °C
25 Gew.-% Verlust bei 440 °C
65,5 Gew.-% Verlust bei 600 °C

**1 H-NMR-Spektrum phoSi-P1 (300 MHz, d6-Dimethylsulfoxid):**

| | |
|---|---|
| 0,01-0,05 ppm, | Integralwert = 1,86 ppm (Si-CH3, 18 H) |
| 1,64 ppm, | Integralwert = 1,00 (i-Propyliden-H, 6 H) |
| 6,85-7,9 ppm, | Integralwert = 2,62 (Ar-H) |

Das Verhältnis der normierten Integrale von Si-CH3 zu i-Propyliden-H ergibt einen Phosphonylierungsgrad von 62 mol-%, entsprechend 0,62 Phosphondisilylester je Bisphenol-A-Einheit.

**1H-NMR-Spektrum pho-P1 (300 MHz, d6-Dimethylsulfoxid):**

| | |
|---|---|
| 1,63 ppm, | Integralwert = 1,00 (i-Propyliden-H, 6 H) |
| 6,85-7,9 ppm, | Integralwert = 2,64 (Ar-H) |

31P-NMR-Spektrum pho-P1 (121,5 MHz, 300 MHz H-Entkopplung, d6-Dimethylsulfoxid):

**19 ppm (Phosphonsäure)**

| | |
|---|---|
| Gravimetrische P-Bestimmung: | w(P) = 6,1 %, entspricht 96 mol-% Phosphorylierung |

### Herstellung des phosphonsauren Polymers pho-P1.2

3 g der bromierten Vorstufe br-P1 (5,85 mmol Brom) wurden mit 15,2 mg (0,12 mmol) wasserfreiem Nickel(II)chlorid, entsprechend 2 mol-% bzgl. Bromgehalt in der oben beschriebenen Weise in 6 ml Diphenylether mit 2,18 g (7,31 mmol) Tris(trimethylsilyl)phosphit umgesetzt. Es wurde ein vergleichbarer Reaktionsverlauf beobachtet und die Produkte in der bereits beschriebenen Art und Weise aufgearbeitet.

| | |
|---|---|
| Auswaage : | 2,87 g |

### Bromgehaltbestimmung:

Oxidativer Aufschluss pho-P1.2 mit KNO₃ / NaO₂ und Titration mit AgNO₃-Lösung und Rücktitration mit FeSCN-Lösung ergab einen Bromgehalt unterhalb der Nachweisgrenze von 0,3 Gew.-% .

### Phosphorgehaltsbestimmung:

Oxidativer Aufschluss der Probe pho-P1.2 mit KNO₃ / NaO₂. Der Durchschnittswert über drei Bestimmungen als 8-Hydroxychinolium-Molydophosphat-Fällung und gravimetrischer Analyse ergibt einen Phosphorgehalt von 5,93 Gew.-%, entsprechend einem Funktionalisierungsgrad von 100,2 mol-% und einem Br-P-Umsatz von 98,2 % d. Theorie.

### Beispiel 2: Herstellung eines phosphonsauren Poly(elektrolyts) auf Basis von Poly(ethersulfän) ULTRASON^{®} E (Substanz P2)

### Herstellung der bromierten Vorstufe br-P2

100g (861,2 mmol Phenyl-Funktionalitäten) Poly(ethersulfon) ULTRASON^{®} E (BASF AG), fortan als P2 bezeichnet, werden in einem 1000 ml Zweihalskolben mit Tropftrichter und Rührwerk bei Raumtemperatur für 4 h in 600 ml konzentrierter (95 - 98%) Schwefelsäure aufgelöst. Zur erhaltenen schwach-beigen, transparenten Lösung werde eine Lösung von 46,36 g (323,2 mmol aktives Brom) Dibromoisocyanursäure in 300 ml konzentrierter (95 - 98%) Schwefelsäure unter schnellem Rühren zugegeben. Hierbei fällt nach wenigen Minuten ein hellbeiger feiner Niederschlag aus. Nach 3h Rühren bei Raumtemperatur wird der Ansatz unter Rühren und Eiskühlung in 5000 ml destilliertem Wasser gefällt und durch mehrfaches Austausch des Fällungsmittel säurefrei gewaschen. Die erhaltenen weißen Polymerfäden werden mechanisch zerkleinert und 24 h mit Methanol über KOH soxlehtiert. Nach Trocknung bei 100 °C im Vakuum für 12 h werden kompakte weiße Flocken erhalten.

| | |
|---|---|
| Auswage: | 124,6 g weiße Flocken und Stränge |

Aus der Massezunahme errechnet sich ein Bromierungsgrad dsBr = 72 mol-%, entsprechend 0,72 Bromatome je Bisphenol-A-Einheit.

**Elementaranalyse br-P2:**

| | | |
|---|---|---|
| C : | 49,82% (ber.) | 49,69% (gef.) |
| H: | 2,51 % (ber.) | 2,57% (gef.) |
| S: | 11,09% (ber.) | 11,50% (gef.) |
| N: | 0,00% (ber.) | 0,00% (gef.) |

Mit dsBr = 182,4863/w(C)-2,9433 folgt dsBr= 73 mol-%, entsprechend 0,73 Bromatome je Wiederhol-Einheit.

**1H-NMR-Spektrum br-P2 (300 MHz, d6-Dimethylsulfoxid):**

| | |
|---|---|
| 7,23 - 7,27 ppm, | Integralwert 4,17 (Ar-H) |
| 7,31 - 7,38 ppm, | Integralwert 0,34 (Ar-H) |
| 7,98 - 7,99 ppm, | Integralwert 3,57 (Ar-H) |
| 8,03 - 8,05 ppm, | Integralwert 1,00 (Ar-H) |
| 8,34; 8,45 ppm, | Integralwert 0,72 (Ar-H) |

### Herstellung des phosphonsauren Polymers pho-P2

10 g der bromierten Vorstufe br-P2 (25,73 mmol Brom) und 334 mg (2,57 mmol) wasserfreiem Ni(II)chlorid werden in einen 100 ml Dreihalskolben mit Rührwerk, offenem Luftkühler und septumverschlossenen Tropftrichter mit Stickstoffeinleitung gegeben. In einem auf 190 °C temperierten Ölbad wird der Ansatz durch Einleitung eines schwachen Stickstoffstromes von Restfeuchte befreit. Zum trocknen Ansatz werden unter N2-Gegenstrom 3 g Benzophenon zugegeben und das Polymer unter Rühren über 1 h zu einer hochviskosen, hell-braunen Lösung verarbeitet. Nachdem die Ölbadtemperatur auf 200 °C erhöht worden ist, wird über das Septum 9,6 g (32,17 mmol) Tris(fimethylsilyl)phosphit in den Tropftrichter gegeben und diese unter Rühren über 30 Minuten dem Ansatz zugefügt. 2 Minuten nach Start der Zugabe wird eine Farbänderung über Purpur nach Dunkelblau beobachtet und durch den N2-Strom eine an der Luft stark rauchende wasserklare Flüssigkeit in eine Kühlfalle abgetrieben. Im Verlauf der nächsten 4 h werden ca. 4 ml dieser Flüssigkeit in der Kühlfalle kondensiert, während am Reaktionsansatz eine Farbvertiefung und Viskositätserhöhung sichtlich wird. Das Rührwerk wird abgeschaltet und der Ansatz für 8 h auf 170 °C temperiert. Nach Abkühlen auf Raumtemperatur Wird unter N2-Gegenstrom eine Probe entnommen und diese unter Luft- und Feuchtigkeitsausschluss durch Ultraschallbehandlung mit dreimal jeweils 10 ml, absolutiertem iso-Hexan von Benzophenon, Trimethylsilylbromid- und Tris(trimethylsilyl)phosphit-Resten befreit. Von der nach Entfernen des Extraktionsmittels durch Trocknen im Stickstoffstrom bei 100 °C erhaltenen beigen Probe, im folgenden als phoSi-P2 bezeichnet, wird ein 1H-Spektrum in Tetramethylsilan-freiem d6-Dimethylsulfoxid aufgenommen. Der restliche Ansatz wird durch Ultraschallbehandlung mit 250 ml einer 100:2 (v/v) Mischung Methanol / Salzsäure-Mischung von Benzophenon befreit und gleichzeitig die Phosphonsäure durch alkoholytische Spaltung des Silylesters freigesetzt. Das erhaltene kompakte Produkt wird mechanisch zerkleinert und 12 h mit Methanol über KOH soxlethiert.

Nach Trocknen im Vakuum bei 75 °C wird ein kompaktes, hellbeiges Material erhalten. Dieses erweist sich als leicht-löslich in warmen N-Methyl-Pyrrolidon, wobei eine hell-beige, auffallend viskose Lösung gebildet wird. Bei Zugabe einiger Tropfen einer 1-% (m/m) Zr(Acetylacetonat)₄-N-Methyl-Pyrrolidon-Lösung kann ein in Dimethylsulfoxid, N,N-Dimethylformamid, N,N-Dimethylacetamid, Trifluoressigsäure und Schwefelsäure unlöslicher weißlicher Niederschlag aus Zr(IV)-Polyphosphonat gefällt werden. Eine entsprechende Fällung kann an N-Methylpyrrolidon-Lösungen von P2 und br-P2 nicht festgestellt werden.

Vom erhaltenen Produkt, welches folgend als pho-P2 bezeichnet wird, wird ein 1 H- und 31 P-NMR-Spektrum in Tetramethylsilan-freiem d6-Dimethylsulfoxid aufgenommen.

| | |
|---|---|
| Auswage : | 9,1 g hell beiges kompaktes Material. |

### Bromgehaltbestimmung:

Oxidativer Aufschluss pho-P2 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%.

### thermogravimetrische Analyse pho-P2:

(Netzsch STA 409, Heizrate, 10 K/min, Luft-Atmosphäre):
5 Gew.-% Verlust bei 330 °C
25 Gew.-% Verlust bei 470 °C
51,1 Gew.-% Verlust bei 600 °C

**1 H-NMR-Spektrum phoSi-P2 (300 MHz, d6-Dimethylsulfoxid):**

| | |
|---|---|
| 0,01-0,05 ppm, | Integralwert = 1,00 ppm (Si-CH3, 18 H) |
| 7,9-8,4 ppm, | Integralwert = 2,86 (Ar-H) |

Das Verhältnis der normierten Integrale von Si-CH₃ zu Ar-H ergibt einen Phosphonylierungsgrad von 15,3 mol-%, entsprechend 0,15 Phosphondisilylester je Monomer-Einheit.

**1 H-NMR-Spektrum pho-P2 (300 MHz, d6-Dimethylsulfoxid):**

| | |
|---|---|
| 7,9-8,4 ppm, | Integralwert = 8 (Ar-H) |

31 P-NMR-Spektrum pho-P2 (121,5 MHz, 300 MHz H-Entkopplung, d6-Dimethylsulfoxid):
19,2 ppm (Phosphonsäure)

### Beispiel 3: Herstellung phosphonsauren Poly(elektrolyts) auf Basis von Poly(etherketon) VICTREX^{®} 450 P (Substanz P3)

### Herstellung der bromierten Vorstufe br-P3

25 g (86,71 mmol Wiederholeinheiten) Poly(etherketon) VICTREX^{®} 450 P, fortan als P3 bezeichnet, werden in einem 250 ml Zweihalskolben mit Tropftrichter und Rührwerk bei 50 °C für 8 h in 200 ml reiner Methansulfonsäure aufgelöst. Zur erhaltenen dunkel orangen, stark viskosen Lösung wird eine Lösung von 15,43 g ( 86,71 mmol aktives Brom) N-Bromsuccinimd in 25 ml reiner Methansulfonsäure unter schnellem Rühren über den Tropftrichter dem Ansatz zugegeben. Nach Rühren für 24 h bei 50 °C wird dunkel-orange unter Eiskühlung in 1000 ml destilliertem Wasser gefällt und durch mehrfaches Austauschen des Fällungsmittel säurefrei gewaschen. Die erhaltenen hellgrauen Polymerfäden werden mechanisch zerkleinert und 24 h mit Methanol über KOH soxlehtiert.

Nach Trocknung bei 100 °C im Vakuum für 12 h werden hellgraue Stränge erhalten. Vom erhaltenen Produkt, fortan als br-P3 bezeichnet, wird ein 1H-NMR-Spektrum in Trifluormethansulfonsäure-Lösung mit externem d6-Aceton-Lock aufgenommen.

| | |
|---|---|
| Auswage: | 31,75 g |

Aus der Massezunahme errechnet sich ein Bromierungsgrad dsBr = 0,99 mol-%, entsprechend 0,99 Bromatome je Monomer-Einheit.

**Elementaranalyse:**

| | | |
|---|---|---|
| C: | 62,15% (ber.) | 61,83% (gef.) |
| H: | 3,02% (ber.) | 4,10 (gef.) |
| S: | 0,00% (ber.) | 0,00% (gef.) |
| N: | 0,00% (ber.) | 0,00% (gef.) |

Mit dsBr = 288,937/w(C)-3,654 ergibt sich ein dsBr = 102 mol-%, entsprechend 1,02 Bromatome je Wiederholungseinheit.

1H-NMR-Spektrum von br-P3 (externer d6-Aceton-Lock, 300 MHz, Trifluormethansulfonsäure):

| | |
|---|---|
| 6,18 ppm, | Integralwert 1,37 (Ar-H) |
| 6,40 ppm, | Integralwert 14,15 (Ar-H) |
| 6,66 ppm, | Integralwert 1,34 (Ar-H) |
| 7,05 ppm, | Integralwert 1,25 (Ar-H) |
| 7,21 ppm, | Integralwert 6,91 (Ar-H) |
| 7,48 ppm, | Integralwert 1,50 (Ar-H) |

Vergleich der Signallagen und Zahl der Signale in 1 H-NMR-Spektren von br-P3 und P3 zeigt Substitution sowohl der p-Oxy-Phenoxy- als auch der p-Oxy-Phenonyl-Ringe der Wiederholungseinheit.

### Herstellung des phosphonsauren Polymers pho-P3

10 g der bromierten Vorstufe br-P3 (27,11 mmol Brom) werden mit 347,2 mg (2,67 mmol) wasserfreiem Ni(II)chlorid in einen 250 ml Dreihalskolben mit Rührwerk, offenem Luftkühler und septumverschlossenen Tropftrichter mit Stickstoffeinleitung gegeben. In einem auf 190 °C temperierten Ölbad wird der Ansatz durch Einleitung eines schwachen Stickstoffstromes von Restfeuchte befreit. Zum trocknen Ansatz werden unter N2-Gegenstrom 30 g Benzophenon zugegeben und das Polymer unter Rühren über 1 h zu einer homogenen hell beigen Lösung verarbeitet. Nachdem die Ölbadtemperatur auf 200 °C erhöht worden ist, wird über das Septum 9,98 g (33,49 mmol) Tris(trimethylsilyl)phosphit in den Tropftrichter gegeben und diese unter Rühren über 30 Minuten dem Ansatz zugefügt. Ungefähr 2 Minuten nach Start der Zugabe wird eine Farbänderung über Purpur nach Dunkelblau beobachtet und durch den N2-Strom eine an der Luft stark rauchende wasserklare Flüssigkeit in eine Kühlfalle abgetrieben. Im Verlauf der nächsten 4 h wird eine zunehmende Farbvertiefung und Viskositätserhöhung sichtbar. Das Rührwerk wird abgeschaltet und der Ansatz für 8 h auf 170 °C temperiert. Nach Abkühlen auf Raumtemperatur wurde unter N2-Gegenstrom eine Probe entnommen und diese unter Luft- und Feuchtigkeitsausschluss durch Ultraschallbehandlung mit dreimal jeweils 10 ml absolutiertem iso-Hexan von Benzophenon, Trimethylsilylbromid- und Tris(trimethylsilyl)phosphit-Resten befreit. Nach Trocknen im N2-Strom bei 100 °C erhält man eine smaragdgrüne Probe, im Folgenden als phoSi-P3 bezeichnet.

Das Produkt ist in deuteriertem DMSO und DMF nur unter Zusatz von Säuren wie HBr oder Trifluoressigsäure löslich, so dass von phoSi-P3 keine NMR-Spektren aufgenommen werden können. Die Probe erweist sich als löslich in warmen N-Methyl-Pyrrolidon unter Zusatz von konz. HBr, wobei eine smaragd-grüne, auffallend viskose Lösung gebildet wird. Bei Zugabe einiger Tropfen einer 1-% (m/m) Zr(Acetylacetonat)₄-N-Methyl-Pyrrolidon-Lösung kann ein auch in Methansulfonsäure unlöslicher käsiger, weißlicher Niederschlag aus Zr(IV)-Polyphosphonaten gefällt werden. Da P3 und br-P3 in N-Methyl-Pyrrolidon unlöslich sind, ist die Gegenprobe am unmodifizierten und bromierten Polymer nicht möglich.

Der restliche Ansatz wird durch Ultraschallbehandlung mit 250 ml einer 100:2 (v/v) Mischung Methanol/Salzsäure-Mischung von Benzophenon befreit und gleichzeitig die Phosphonsäure durch alkoholytische Spaltung des Silylesters freigesetzt. Das kompakte Produkt wird mechanisch zerkleinert und 12 h mit Methanol über KOH soxlethiert.

Nach Trocknen im Vakuum bei 75 °C wird ein kompaktes, hellbeiges Material erhalten. Das erhaltene Produkt wird folgend als pho-P3 bezeichnet. Es wird ein 1 H-Spektrum in Tetramethylsilan-freiem d6-Dimethylsulfoxid unter Zusatz von 2 Vol.-% Trifluoressigsäure aufgenommen.

| | |
|---|---|
| Auswage : | 9,4 g |

### Bromgehaltbestimmung:

Oxidativer Aufschluss pho-P3 mit KNO₃ / NaO₂ und Titration mit AgNO₃-Lösung und Rücktitration mit FeSCN-Lösung ergibt einen Bromgehalt unterhalb der Nachweisgrenze von 0,3 Gew.-%

thermogravimetrische, Analyse phoP3 (Netzsch STA 409, Heizrate 10 K/min, Luft-Atmosphäre):
5 Gew.-% Verlust bei 190 °C
25 Gew.-% Verlust bei 464 °C
35,0 Gew.-% Verlust bei 600 °C

1H-NMR-Spektrum pho-P3 (d6-Dimethylsulfoxid + 2 Vol.-% Trifluoressigsäure, 400 MHz):

| | |
|---|---|
| 7,05 - 7,1 ppm, | Integralwert 3,1 (Ar-H) |
| 7,35 ppm, | Integralwert 1,2 (Ar-H) |
| 7,56 ppm, | Integralwert 1,1 (Ar-H) |
| 7,80 - 7,92 ppm, | Integralwert 3,8 (Ar-H) |
| 8,11 ppm, | Integralwert 1,14 (Ar-H) |

31 P-NMR-Spektrum pho-P3 (d6-Dimethylsulfoxid + 2 Vol.-% Trifluoressigsäure, 400 MHz):

| | |
|---|---|
| 14 ppm | (Phosphonsäure in stark saurer Umgebung) |

### Beispiel 4: Herstellung eines phosphonsauren Poly(elektrolyts) auf Basis von Poly(sulfon) ULTRASON^{®} S

25 g (56,5 mmol Bisphenol-A-Einheiten) Poly(sulfons) ULTRASON S wurden in einem 250 ml Dreihalskolben in einem auf 70°C temperierten Ölbad in 20 Minuten durch Rühren in 100 ml Chloroform aufgelöst und mit 75 g (94,1 mmol) Brom in 25 mol Chloroform in bereits beschriebener Art und Weise umgesetzt und aufgearbeitet.

Das erhaltene Produkt wird fortan als br-P4 bezeichnet.

| | |
|---|---|
| Auswaage: | 34,38 g |

Aus der Massezunahme errechnet sich ein Bromierungsgrad ds_{Br} = 210 mol-%, entsprechend 2,1 Bromatome je Bisphenol-A-Einheit.

**Elementaranalyse:**

| | | |
|---|---|---|
| C : | 53,27 % (ber.) | 52,18 % (gef.) |
| H: | 3,27 % (ber.) | 3,20 (gef.) |
| S: | 5,27 % (ber.) | 5,33 % (gef.) |

Mit ds_{Br} = 410,5943/w(C)-5,6082 folgt ds_{Br}= 226 mol-%, entsprechend 2,26 Bromatome je Bisphenol-A-Einheit.

### Herstellung des phosphonsauren Polymers pho-P4.1

5 g der bromierten Vorstufe br-P4 (17,26 mmol Brom) wurden mit 224 mg (1,73 mmol) wasserfreiem Nickel(II)chlorid, entsprechend 10 mol-% bzgl. Bromgehalt in der oben beschriebenen Weise in 10 ml Diphenylether mit 6,44 g (21,58 mmol) Tris(trimethylsilyl)phosphit umgesetzt. Es wurde ein vergleichbarer Reaktionsverlauf beobachtet und die Produkte in der bereits beschriebenen Art und Weise aufgearbeitet.

| | |
|---|---|
| Auswaage : | 5,02 g |

### Bromgehaltbestimmung:

Oxidativer Aufschluss pho-P4.1 mit KNO₃ / NaO₂ und Titration mit AgNO₃-Lösung und Rücktitration mit FeSCN-Lösung ergab einen Bromgehalt unterhalb der Nachweisgrenze von 0,3 Gew.-%.

### Phosphorgehaltsbestimmung:

Oxidativer Aufschluss der Probe pho-P4.1 mit KNO₃ / NaO₂. Der Durchschnittswert über drei Bestimmungen als 8-Hydroxychinolium-Molybdophosphat-Fällung und gravimetrischer Analyse ergibt einen Phosphorgehalt von 10,98 Gew.-%, entsprechend einem Funktionalisierungsgrad von 219,7 mol-% und einem Br-P-Umsatz von 97,2 % d. Theorie.

### Herstellung des phosphonsauren Polymers pho-P4.2

5 g der bromierten Vorstufe br-P4 (17,26 mmol Brom) wurden mit 112 mg (0,83 mmol) wasserfreiem Nickel(II)chlorid, entsprechend 5 mol-% bzgl. Bromgehalt in der oben beschriebenen Weise mit 6,44 g (21,58 mmol) Tris(trimethylsilyl)phosphit in 10 ml Diphenylether umgesetzt. Es wurde ein vergleichbarer Reaktionsverlauf beobachtet und die Produkte in der bereits beschriebenen Art und Weise aufgearbeitet.

| | |
|---|---|
| Auswaage : | 5,02 g |

### Bromgehaltbestimmung:

Oxidativer Aufschluß pho-P4.2 mit KNO₃ / NaO₂ und Titration mit AgNO₃-Lösung und Rücktitration mit FeSCN-Lösung ergab einen Bromgehalt unterhalb der Nachweisgrenze von 0,3 Gew.-%.

### Phosphorgehaltsbestimmung:

Oxidativer Aufschluss der Probe pho-P4.2 mit KNO₃ / NaO₂. Der Durchschnittswert über drei Bestimmungen als 8-Hydroxychinolium-Molybdophosphat-Fällung und gravimetrischer Analyse ergibt einen Phosphorgehalt von 10,43 Gew.-%, entsprechend einem Funktionalisierungsgrad von 204,7 mol-% und einem Br-P-Umsatz von 90,6 % d. Theorie.

### Herstellung des phosphonsauren Polymers pho-P4.3

3 g der bromierten Vorstufe br-P4 (10,92 mmol Brom) wurden mit 14,1 mg (0,11 mmol) wasserfreiem Nickel(II)chlorid, entsprechend 1 mol-% bzgl. Bromgehalt in der oben beschriebenen Weise mit 4,08 g (13,65 mmol) Tris(trimethylsilyl)phosphit in 6 ml Diphenylether umgesetzt. Es wurde ein vergleichbarer Reaktionsverlauf beobachtet und die Produkte in der bereits beschriebenen Art und Weise aufgearbeitet.

| | |
|---|---|
| Auswaage : | 3,0 g |

### Brompehaltbestimmung:

Oxidativer Aufschluss pho-P4.3 mit KNO₃ / NaO₂ und Titration mit AgNO₃-Lösung und Rücktitration mit FeSCN-Lösung ergab einen Bromgehalt unterhalb der Nachweisgrenze von 0,3 Gew.-%.

### Phosphorgehaltsbestimmung:

Oxidativer Aufschluss der Probe pho-P4.3 mit KNO₃ / NaO₂. Der Durchschnittswert über drei Bestimmungen als 8-Hydroxychinolium-Molybdophosphat-Fällung und gravimetrischer Analyse ergibt einen Phosphorgehalt von 11,1 Gew.-%, entsprechend einem Funktionalisierungsgrad von 217,5 mol-% und einem Br-P-Umsatz von 96,2 % d. Theorie.

## Patentansprüche

1. Halogenfreie, oligo- oder polymere Phosphonsäuren aufgebaut aus Einheiten der allgemeinen Formel (I)
-[(O)ₘ-{R¹(X)ₙ(Y)ₒ}ₚR¹(X)_{q}]ᵣ-[(O)ₛ-R⁵(X)ₜ]ᵥ- (I),
mit den folgenden Bedeutungen:
X -P=O(OH)₂,
Y Carbonyl oder Sulfonyl,
R¹, R⁵ unabhängig voneinander zwei- oder polyvalente, substituierte oder unsubstituierte, heteroatomfreie aromatische Reste,
m, o, s 0 ,
n, q, t unabhängig voneinander 0 oder ganze Zahlen von 1 bis 8, wobei n und s nicht gleichzeitig 0 sind,
r, v unabhängig voneinander 0 bis 1, wobei die Summe von r und v 0,95 bis 1,05 ist, und
p 0 oder ganze Zahl ≥ 1,
wobei X Substituenten von R¹ und R⁵ sind, und Y Teile einer Polymer- oder Oligomerkette sind.

2. Phosphonsäuren nach Anspruch 1, **dadurch gekennzeichnet, dass** in der allgemeinen Formel (I) Y Sulfonyl und n 1 sind.

3. Phosphonsäuren nach Anspruch 1, **dadurch gekennzeichnet, dass** in der allgemeinen Formel (I) Y Carbonyl ist.

4. Verfahren zur Herstellung von halogenfreien, oligo- oder polymeren Phosphonsäuren aufgebaut aus Einheiten der allgemeinen Formel (I) gemäß einem der Ansprüche 1 bis 3, umfassend die Schritte:
(a) Umsetzung von oligo- oder polymeren Verbindungen, aufgebaut aus Einheiten der allgemeinen Formel (II)
-[(O)ₘ-[R¹(Y)ₒ}ₚR¹]ᵣ-[(O)ₛ-R⁵]ᵥ- (II),
mit den folgenden Bedeutungen:
Y Carbonyl oder Sulfonyl,
R¹, R⁵ unabhängig voneinander zwei- oder polyvalente, substituierte oder unsubstituierte, heteroatomfreie aromatische Reste,
m, o, s 0 wobei n und s nicht gleichzeitig 0 sind,
r, v unabhängig voneinander 0 bis 1, wobei die Summe von r und v 0,95 bis 1,05 ist und
p 0 oder ganze Zahl ≥ 1,
wobei X Substituenten von R¹ und R⁵ sind, und Y Teile einer Polymer- oder Oligomerkette sind,
mit Halogenierungsmitteln bei einer Temperatur von -20 bis 140 °C in einem inerten Lösungsmittel, wobei halogenaromatische oligo- oder polymere Verbindungen aufgebaut aus Einheiten der der allgemeinen Formel (III)
-[(O)ₘ-{R¹(Hal)ₙ(Y)ₒ}ₚR¹(Hal)_{q}]ᵣ-(O)ₛ-R⁶(Hal)ₜ]ᵥ- (III),
mit den für die Einheiten der allgemeinen Formel (I) angegebenen Bedeutungen für R¹, R⁵, Y, m, n, o, p, q, r, s, t und v und Hal Halogen erhalten werden,
(b) Umsetzung der in Stufe (a) erhaltenen halogenaromatischen, oligo- oder polymeren Verbindungen aufgebaut aus Einheiten der allgemeinen Formel (III) in einem Stickstoff-freien Lösungsmittel oder einem Gemisch von Stickstoff-freien Lösungsmitteln mit O-silylierten Sauerstoffverbindungen des dreiwertigen Phosphors bei Temperaturen oberhalb von 100 °C in Gegenwart eines Katalysators enthaltend mindestens ein Metall aus der Platingruppe des Periodensystems der Elemente, wobei oligo- oder polymere, silylierte Polyphosphonsäuren aufgebaut aus Einheiten der allgemeinen Formel (IV)
-[(O)ₘ-{R¹(Z)ₙ(Y)ₒ}ₚR¹(Z)_{q}]ᵣ-[(O)ₛ-R⁵(Z)ₜ]ᵥ- (IV),
mit den für die Einheiten der Formel (I) angegebenen Bedeutungen für R¹, R⁵, Y, m, n, o, p, q, r, s, t und v und Z -P(=O)(OSiR²R³R⁴)(OSiR⁶R⁷R⁸) mit R², R³, R⁴, R⁶, R⁷, R⁸ unabhängig voneinander einwertige Alkyl-, Alkenyl-, arylaliphatische, cycloaliphatische oder heterogruppenhaltige Alkylreste, erhalten werden und
(c) Umsetzung der in Schritt (b) erhaltenen oligo- oder polymeren, silylierten Phosphonsäuren aufgebaut aus Einheiten der allgemeinen Formel (IV) mit organischen Verbindungen, die azide Wasserstoffatome aufweisen, wobei halogenfreie, oligo- oder polymere Phosphonsäuren aufgebaut aus Einheiten der allgemeinen Formel (I)
-[(O)ₘ-{R¹(X)ₙ(Y)ₒ}ₚR¹(X)_{q}]ᵣ-[(O)ₛ-R⁵(X)ₜ]ᵥ- (I),
erhalten werden.

5. Verfahren nach Anspruch 4, **dadurch gekennzeichnet, dass** das Halogenierungsmittel ein Bromierungsmittel ist,

6. Verfahren nach Anspruch 4 oder 5, **dadurch gekennzeichnet, dass** das Stickstoff-freie Lösungsmittel ausgewählt ist aus der Gruppe bestehend aus Benzophenon, Diphenylether, Diphenylsulfon und Mischungen davon.

7. Verfahren nach einem der Ansprüche 4 bis 6, **dadurch gekennzeichnet, dass** die O-silylierte Sauerstoffverbindung des dreiwertigen Phosphors HP(OSiR²R³R⁴)₂ und/oder P(OSiR²R³R⁴)₃ ist

8. Halogenfreie, oligo- oder polymere, silylierte Phosphonsäuren aufgebaut aus 8. Halogenfreie, oligo- oder polymere, silylierte Phosphonsäuren aufgebaut aus Einheiten der allgemeinen Formel (IV)
-[(O)ₘ-{R¹(Z)ₙ(Y)ₒ}ₚR¹(Z)_{q}]ᵣ-[(O)ₛR⁵(Z)ₜ]ᵥ- (IV),
mit den folgenden Bedeutungen:
Z -P(=O)(OSiR²R³R⁴)(OSiR⁶R⁷R⁸) mit R², R³, R⁴, R⁶, R⁷, R⁸ unabhängig voneinander einwertige Alkyl-, Alkenyl-, arylaliphatische, cycloaliphatische oder heterogruppenhaltlge Alkylreste,
Y Carbonyl oder Sulfonyl,
R¹, R⁵ unabhängig voneinander zwei- oder polyvalente, substituierte oder unsubstituierte, heteroatomfreie aromatische Reste,
m, o, s 0 ,
n, q, t unabhängig voneinander 0 oder ganze Zahlen von 1 bis 8, wobei n und s nicht gleichzeitig 0 sind,
r, v unabhängig voneinander 0 bis 1, wobei die Summe von r und v 0,95 bis 1,05 ist, und
p 0 oder ganze Zahl ≥ 1,
wobei Z Substituenten von R¹ und R⁵ sind, und Y Teile einer Polymer- oder Oligomerkette sind.

9. Verfahren zur Herstellung von halogenfreien, oligo- oder polymeren, silylierten Phosphonsäuren aufgebaut aus Einheiten der allgemeinen Formel (IV) gemäß Anspruch 9, umfassend die Schritte:
(a) Umsetzung von oligo- oder polymeren Verbindungen, aufgebaut aus Einheiten der allegemeinen Formel (II)
-[(O)ₘ-{R¹(Y)ₒ}ₚR¹]ᵣ-[(O)ₛ-R⁵]ᵥ- (II),
mit den folgenden Bedeutungen;
Y Carbonyl oder Sulfonyl,
R¹, R⁵ unabhängig voneinander zwei- oder polyvalente, substituierte oder unsubstituierte, heteroatomfreie aromatische Reste,
m, o, s 0 , wobei n und s nicht gleichzeitig 0 sind,
r, v unabhängig voneinander 0 bis 1, wobei die Summe von r und v 0,95 bis 1,05 ist, und
p 0 oder ganze Zahl ≥ 1 ist,
wobei X Substituenten von R¹ und R⁵ sind, und Y Teile einer Polymer- oder Oligomerkette sind,
mit Halogenierungsmitteln bei einer Temperatur von -20 bis 140 °C, in einem inerten Lösungsmittel, wobei halogenaromatische oligo- oder polymere Verbindungen aufgebaut aus Einheiten der der allgemeinen Formel (III)
-[(O)ₘ-{R¹(Hal)ₙ(Y)ₒ}ₚR¹(Hal)_{q}]ᵣ-(O)ₛ-R⁵(Hal)ₜ]ᵥ- (III).
mit den für die Einheiten der allgemeinen Formel (I) angegebenen Bedeutungen für R¹, R⁶, Y, m, n, o, p, q, r, s, t und v und Hal Halogen erhalten werden und
(b) Umsetzung der in Stufe (a) erhaltenen halogenaromatischen, oligo- oder polymeren Verbindungen aufgebaut aus Einheiten der allgemeinen Formel (III) in einem Stickstoff-freien Lösungsmittel oder einem Gemisch von Stickstoff-freien Lösungsmitteln mit O-silylierten Sauerstoffverbindungen des dreiwertigen Phosphors bei Temperaturen oberhalb von 100 °C in Gegenwart eines Katalysators enthaltend ein Metall aus der Platingruppe des Periodensystems der Elemente, wobei oligo- oder polymere, silylierte Polyphosphonsäuren aufgebaut aus Einheiten der der allgemeinen Formel (IV)
-[(O)ₘ-{R¹(Z)ₙ(Y)ₒ}ₚR¹ (Z)_{q}]ᵣ-[(O)ₛ-R⁵(Z)ₜ]ᵥ- (IV)
erhalten werden.

10. Halogenfreie Mischungen, enthaltend
(A) 0,1 bis 99,9 Gew.-% einer oder mehrerer Verbindungen gemäß einem der Ansprüche 1 bis 3 und
(B) 0,1 bis 99,9 Gew.-% eines Stickstoff-freien Lösungsmittels mit einem Siedepunkt > 150 °C.

11. Filme, Komposit- oder Verbundmaterialien enthaltend wenigstens eine Verbindung gemäß einem der Ansprüche 1 bis 3.

12. Polymerblends enthaltend wenigstens eine Verbindung gemäß einem der Ansprüche 1 bis 3 und wenigstens ein weiteres Polymer.

13. Membranen enthaltend wenigstens eine Verbindung gemäß einem der Ansprüche 1 bis 3 oder wenigstens ein Polymerblend gemäß Anspruch 13.

14. Verwendung einer Membran nach Anspruch 13 in Brennstoffzellen oder als Membranen für die Trenntechnik.

15. Verwendung nach Anspruch 14 **dadurch gekennzeichnet, dass** die Membranen selektiv permeable Membranen in der Wasserentsaizung, Abwasser-Reinigung, Dialyse sowie in der Ionenextraktion und -retention sind.

16. Verwendung mindestens einer Verbindung nach einem der Ansprüche 1 bis 3 oder eines Polymerblends nach Anspruch 12 in Brennstoffzellen.

17. Brennstoffzelle enthaltend wenigstens eine Verbindung nach einem der Ansprüche 1 bis 3 oder wenigstens ein Polymerblend nach Anspruch 12.

## Claims

1. A halogen-free, oligomeric or polymeric phosphonic acid made up of units of the general formula (I)
-[(O)ₘ-{R¹(X)ₙ(Y)ₒ}ₚR¹(X)_{q}]ᵣ(O)ₛ-R⁵(X)ₜ]ᵥ- (I),
where:
X is -P=O(OH)₂,
Y is carbonyl or sulfonyl,
R¹, R⁵ are, independently of one another, divalent or polyvalent, substituted or unsubstituted, heteroatom-free aromatic radicals,
m, o, s are each 0,
n, q, t are each, independently of one another, 0 or an integer from 1 to 8, with n and s not simultaneously being 0,
r, v are each, independently of one another, from 0 to 1, with the sum of r and v being from 0.95 to 1.05, and
p is 0 or an integer ≥ 1,
where the radicals X are substituents on R¹ and R⁵ and the radicals Y are parts of a polymer or oligomer chain.

2. The phosphonic acid according to claim 1, wherein Y is sulfonyl and n is 1 in the general formula (I).

3. The phosphonic acid according to claim 1, wherein Y is carbonyl in the general formula (I).

4. A process for preparing halogen-free, oligomeric or polymeric phosphonic acids made up of units of the general formula (I) according to any of claims 1 to 3, which comprises the steps:
(a) reaction of oligomeric or polymeric compounds made up of units of the general formula (II)
-[(O)ₘ-{R¹(Y)ₒ}ₚR¹]ᵣ-[(O)ₛ-R⁵]ᵥ- (II),
where:
Y is carbonyl or sulfonyl,
R¹, R⁵ are, independently of one another, divalent or polyvalent, substituted or unsubstituted, heteroatom-free aromatic radicals,
m, o, s are each 0, with n and s not simultaneously being 0,
r, v are each, independently of one another, from 0 to 1, with the sum of r and v being from 0.95 to 1.05, and
p is 0 or an integer ≥ 1,
where the radicals X are substituents on R¹ and R⁵ and the radicals Y are parts of a polymer or oligomer chain,
with halogenating agents at a temperature of from -20 to 140°C in an inert solvent to give haloaromatic oligomeric or polymeric compounds made up of units of the general formula (III)
-[(O)ₘ-{R¹(Hal)ₙ(Y)ₒ}ₚR¹(Hal)_{q}]ᵣ-(O)ₛ-R⁵(Hal)ₜ]ᵥ- (III)
where R¹, R⁵, Y, m, n, o, p, q, r, s, t and v have the meanings given for the units of the general formula (I) and Hal is halogen,
(b) reaction of the haloaromatic, oligomeric or polymeric compounds made up of units of the general formula (III) obtained in step (a) with O-silylated oxygen compounds of trivalent phosphorus in a nitrogen-free solvent or a mixture of nitrogen-free solvents at temperatures above 100°C in the presence of a catalyst comprising at least one metal of the platinum group of the Periodic Table of the Elements to give oligomeric or polymeric, silylated polyphosphonic acids made up of units of the general formula (IV)
-[(O)ₘ-{R¹(Z)ₙ(Y)ₒ}ₚR¹(Z)_{q}]ᵣ-[(O)ₛ-R⁵(Z)ₜ]ᵥ- (IV),
where R¹, R⁵, Y, m, n, o, p, q, r, s, t and v have the meanings given for the units of the formula (I) and Z is -P(=O)(OSiR²R³R⁴)(OSiR⁶R⁷R⁸), where R², R³, R⁴, R⁶, R⁷, R⁸ are, independently of one another, monovalent alkyl, alkenyl, arylaliphatic, cycloaliphatic or heterogroup-comprising alkyl radicals, and
(c) reaction of the oligomeric or polymeric, silylated phosphonic acids made up of units of the general formula (IV) obtained in step (b) with organic compounds having acidic hydrogen atoms to give halogen-free, oligomeric or polymeric phosphonic acids made up of units of the general formula (I)
-[(O)ₘ-{R¹(X)ₙ(Y)ₒ}ₚR¹(X)_{q}]ᵣ-[(O)ₛ-R⁵(X)ₜ]ᵥ- (I).

5. The process according to claim 4, wherein the halogenating agent is a brominating agent.

6. The process according to claim 4 or 5, wherein the nitrogen-free solvent is selected from the group consisting of benzophenone, diphenyl ether, diphenyl sulfone and mixtures thereof.

7. The process according to any of claims 4 to 6, wherein the O-silylated oxygen compound of trivalent phosphorus is HP(OSiR²R³R⁴)₂ and/or P(OSiR²R³R⁴)_{3.}

8. A halogen-free, oligomeric or polymeric, silylated phosphonic acid made up of units of the general formula (IV)
-[(O)ₘ-{R¹(Z)ₙ(Y)ₒ}ₚR¹(Z)_{q}]ᵣ-[(O)ₛ-R⁵(Z)ₜ]ᵥ- (IV),
where:
Z is -P(=O)(OSiR²R³R⁴)(OSiR⁶R⁷R⁸) where R², R³, R⁴, R⁶, R⁷, R⁸ are, independently of one another, monovalent alkyl, alkenyl, arylaliphatic, cycloaliphatic or heterogroup-comprising alkyl radicals,
Y is carbonyl or sulfonyl,
R¹, R⁵ are, independently of one another, divalent or polyvalent, substituted or unsubstituted, heteroatom-free aromatic radicals,
m, o, s are each 0,
n, q, t are each, independently of one another, 0 or an integer from 1 to 8, with n and s not simultaneously being 0,
r, v are each, independently of one another, from 0 to 1, with the sum of r and v being from 0.95 to 1.05, and
p is 0 or an integer ≥ 1,
where the radicals Z are substituents on R¹ and R⁵ and the radicals Y are parts of a polymer or oligomer chain.

9. A process for preparing halogen-free, oligomeric or polymeric, silylated phosphonic acids made up of units of the general formula (IV) according to claim 8, which comprises the steps:
(a) reaction of oligomeric or polymeric compounds made up of units of the general formula (II)
-[(O)ₘ-{R¹(Y)ₒ}ₚR¹]ᵣ-[(O)ₛ-R⁵]ᵥ- (II),
where:
Y is carbonyl or sulfonyl,
R¹, R⁵ are, independently of one another, divalent or polyvalent, substituted or unsubstituted, heteroatom-free aromatic radicals,
m, o, s are each 0, with n and s not simultaneously being 0,
r, v are each, independently of one another, from 0 to 1, with the sum of r and v being from 0.95 to 1.05, and
p is 0 or an integer ≥ 1,
where the radicals X are substituents on R¹ and R⁵ and the radicals Y are parts of a polymer or oligomer chain,
with halogenating agents at a temperature of from -20 to 140°C in an inert solvent to give haloaromatic oligomeric or polymeric compounds made up of units of the general formula (III)
-[(O)ₘ-{R¹(Hal)ₙ(Y)ₒ}ₚR¹(Hal)_{q}]ᵣ-[(O)ₛ-R⁵(Hal)ₜ]ᵥ- (III)
where R¹, R⁵, Y, m, n, o, p, q, r, s, t and v have the meanings given for the units of the general formula (I) and Hal is halogen, and
(b) reaction of the haloaromatic, oligomeric or polymeric compounds made up of units of the general formula (III) obtained in step (a) with O-silylated oxygen compounds of trivalent phosphorus in a nitrogen-free solvent or a mixture of nitrogen-free solvents at temperatures above 100°C in the presence of a catalyst comprising a metal of the platinum group of the Periodic Table of the Elements to give oligomeric or polymeric, silylated polyphosphonic acids made up of units of the general formula (IV)
-[(O)ₘ-{R¹(Z)ₙ(Y)ₒ}ₚR¹(Z)_{q}]ᵣ-[(O)ₛ-R⁵(Z)ₜ]ᵥ- (IV).

10. A halogen-free mixture comprising
(A) from 0.1 to 99.9% by weight of one or more compounds according to any of claims 1 to 3 and
(B) from 0.1 to 99.9% by weight of a nitrogen-free solvent having a boiling point of > 150°C.

11. A film or composite comprising at least one compound according to any of claims 1 to 3.

12. A polymer blend comprising at least one compound according to any of claims 1 to 3 and at least one further polymer.

13. A membrane comprising at least one compound according to any of claims 1 to 3 or at least one polymer blend according to claim 12.

14. The use of a membrane according to claim 13 in fuel cells or as membranes for separation technology.

15. The use according to claim 14, wherein the membrane is a selectively permeable membrane in the desalination of water, wastewater purification, dialysis or in ion extraction and retention.

16. The use of at least one compound according to any of claims 1 to 3 or a polymer blend according to claim 12 in fuel cells.

17. A fuel cell comprising at least one compound according to any of claims 1 to 3 or at least one polymer blend according to claim 12.

## Revendications

1. Acides phosphoniques oligo- ou polymères exempts d'halogènes constitués d'unités de formule générale (I)
-[(O)ₘ-{R¹(X)ₙ(Y)ₒ}ₚ}R¹(X)_{q}]ᵣ-[(O)ₛ-R⁵(X)ₜ]ᵥ- (I)
avec les significations suivantes :
X -P=O (OH)₂,
Y carbonyle ou sulfonyle,
R¹, R⁵ indépendamment l'un de l'autre radicaux aromatiques bi- ou polyvalentes, substitués ou non substitués, exempts d'hétéroatomes,
m, o, s 0, n, q, t indépendamment les uns des autres 0 ou des nombres entiers de 1 à 8, n et s ne représentant pas simultanément 0,
r, v indépendamment l'un de l'autre 0 à 1, la somme de r et v étant de 0,95 à 1,05, et
p 0 ou un nombre entier ≥ 1,
les X étant des substituants de R¹ et R⁵, et les Y faisant partie d'une chaîne polymère ou oligomère.

2. Acides phosphoniques selon la revendication 1, **caractérisés en ce que**, dans la formule générale (I), Y représente sulfonyle et n représente 1.

3. Acides phosphoniques selon la revendication 1, **caractérisés en ce que**, dans la formule générale (I), Y représente carbonyle.

4. Procédé de fabrication d'acides phosphoniques oligo- ou polymères exempts d'halogènes constitués d'unités de formule générale (I) selon l'une quelconque des revendications 1 à 3, comprenant les étapes suivantes :
(a) la mise en réaction de composés oligo- ou polymères constitués d'unités de formule générale (II)
-[(O)ₘ-{R¹(Y)ₒ}ₚR¹]ᵣ-[(O)ₛ-R⁵]ᵥ- (II)
avec les significations suivantes :
Y carbonyle ou sulfonyle,
R¹, R⁵ indépendamment l'un de l'autre radicaux aromatiques bi- ou polyvalents, substitués ou non substitués, exempts d'hétéroatomes,
m, o, s 0, n et s ne représentant pas simultanément 0,
r, v indépendamment l'un de l'autre 0 à 1, la somme de r et v étant de 0,95 à 1,05, et
p 0 ou un nombre entier ≥ 1,
les X étant des substituants de R¹ et R⁵, et les Y faisant partie d'une chaîne polymère ou oligomère,
avec des agents d'halogénation à une température de -20 à 140 °C dans un solvant inerte, des composés oligo- ou polymères halogéno-aromatiques constitués d'unités de formule générale (III)
-[(O)ₘ-{R¹(Hal)ₙ(Y)ₒ}pR¹(Hal)_{q}]ᵣ-[(O)ₛ-R⁵(Hal)ₜ]ᵥ- (III)
avec les significations données pour les unités de formule générale (I) pour R¹, R⁵, Y, m, n, o, p, q, r, s, t et v et Hal signifiant halogène,
étant obtenus,
(b) la mise en réaction des composés oligo- ou polymères halogéno-aromatiques constitués d'unités de formule générale (III) obtenus à l'étape (a) dans un solvant exempt d'azote ou un mélange de solvants exempts d'azote avec des composés oxygénés O-silylés de phosphore trivalent à des températures supérieures à 100 °C en présence d'un catalyseur contenant au moins un métal du groupe du platine du tableau périodique des éléments, des acides polyphosphoniques silylés oligo- ou polymères constitués d'unités de formule générale (IV)
-[(O)ₘ-{R¹(Z)ₙ(Y)ₒ}ₚR¹(Z)_{q}]ᵣ-[(O)ₛ-R⁵(Z)ₜ]ᵥ- (IV)
avec les significations données pour les unités de formule (I) pour R¹, R⁵, Y, m, n, o, p, q, r, s, t et v et Z signifiant -P(=O)(OSiR²R³R⁴)(OSiR⁶R⁷R⁸) avec R², R³, R⁹, R⁶, R⁷, R⁸ signifiant indépendamment les uns des autres des radicaux monovalents alkyle, alcényle, alkyle arylaliphatiques, cycloaliphatiques ou contenant des hétérogroupes,
étant obtenus, et
(c) la mise en réaction des acides phosphoniques silylés oligo- ou polymères constitués d'unités de formule générale (IV) obtenus à l'étape (b) avec des composés organiques qui comprennent des atomes d'hydrogène azides, des acides phosphoniques oligo- ou polymères exempts d'halogènes constitués d'unités de formule générale (I)
-[(O)ₘ-{R¹(X)ₙ(Y)ₒ}ₚR¹(X)_{q}]ᵣ-[(O)ₛ-R⁵(X)ₜ]ᵥ- (I)
étant obtenus.

5. Procédé selon la revendication 4, **caractérisé en ce que** l'agent d'halogénation est un agent de bromation.

6. Procédé selon la revendication 4 ou 5, **caractérisé en ce que** le solvant exempt d'azote est choisi dans le groupe constitué par la benzophénone, l'éther diphénylique, la diphénylsulfone et leurs mélanges.

7. Procédé selon l'une quelconque des revendications 4 à 6, **caractérisé en ce que** le composé oxygéné O-silylé de phosphore trivalent est HP(OSiR²R³R⁴)₂ et/ou P(OSiR²R³R⁴)₃.

8. Acides phosphoniques silylés oligo- ou polymères exempts d'halogènes constitués d'unités de formule générale (IV)
-[(O)ₘ-{R¹(Z)ₙ(Y)ₒ}ₚR¹(Z)_{q}]ᵣ-[(O)ₛ-R⁵(Z)ₜ]ᵥ- (IV)
avec les significations suivantes :
Z -P(=O)(OSiR²R³R⁴)(OSiR⁶R⁷R⁴) avec R², R³, R⁴, R⁶, R⁷, R⁸ signifiant indépendamment les uns des autres des radicaux, monovalents alkyle, alcényle, alkyle arylaliphatiques, cycloaliphatiques ou contenant des hétérogroupes,
Y carbonyle ou sulfonyle,
R¹, R⁵ indépendamment l'un de l'autre radicaux aromatiques bi- ou polyvalents, substitués ou non substitués, exempts d'hétéroatomes,
m, o, s 0, n, q, t indépendamment les uns des autres 0 ou des nombres entiers de 1 à 8, n et s ne représentant pas simultanément 0,
r, v indépendamment l'un de l'autre 0 à 1, la somme de r et v étant de 0,95 à 1,05, et
p 0 ou un nombre entier ≥ 1,
les Z étant des substituants de R¹ et R⁵, et les Y faisant partie d'une chaîne polymère ou oligomère.

9. Procédé de fabrication d'acides phosphoniques silylés oligo- ou polymères exempts d'halogènes constitués d'unités de formule générale (IV) selon la revendication 8, comprenant les étapes :
(a) la mise en réaction de composés oligo- ou polymères constitués d'unités de formule générale (II)
-[(O)ₘ-{R¹(Y)ₒ}ₚR¹]ᵣ-[(O)ₛ-R⁵]ᵥ- (II)
avec les significations suivantes :
Y carbonyle ou sulfonyle,
R¹, R⁵ indépendamment l'un de l'autre radicaux aromatiques bi- ou polyvalents, substitués ou non substitués, exempts d'hétéroatomes,
m, o, s 0, n et s ne représentant pas simultanément 0,
r, v indépendamment l'un de l'autre 0 à 1, la somme de r et v étant de 0,95 à 1,05, et
p 0 ou un nombre entier ≥ 1,
les X étant des substituants de R¹ et R⁵, et les Y faisant partie d'une chaîne polymère ou oligomère,
avec des agents d'halogénation à une température de -20 à 140 °C dans un solvant inerte, des composés oligo- ou polymères halogéno-aromatiques constitués d'unités de formule générale (III)
-[(O)ₘ-{R¹(Hal)ₙ(Y)ₒ}ₚR¹(Hal)_{q}]ᵣ-[(O)ₛ-R⁵(Hal)ₜ]ᵥ- (III)
avec les significations données pour les unités de formule générale (I) pour R¹, R⁵, Y, m, n, o, p, q, r, s, t et v et Hal signifiant halogène,
étant obtenus,
(b) la mise en réaction des composés oligo- ou polymères halogéno-aromatiques constitués d'unités de formule générale (III) obtenus à l'étape (a) dans un solvant exempt d'azote ou un mélange de solvants exempts d'azote avec des composés oxygénés O-silylés de phosphore trivalent à des températures supérieures à 100 °C en présence d'un catalyseur contenant un métal du groupe du platine du tableau périodique des éléments, des acides polyphosphoniques silylés oligo- ou polymères constitués d'unités de formule générale (IV)
-[(O)ₘ-{R¹(Z)ₙ(Y)ₒ}ₚR¹(Z)_{q}]ᵣ-[(O)ₛ-R⁵(Z)ₜ]ᵥ- (IV)
étant obtenus.

10. Mélanges exempts d'halogènes, contenant :
(A) 0,1 à 99,9 % en poids d'un ou de plusieurs composés selon l'une quelconque des revendications 1 à 3, et
(B) 0,1 à 99,9 % en poids d'un solvant exempt d'azote ayant un point d'ébullition > 150 °C.

11. Films, matériaux composites ou feuilletés contenant au moins un composé selon l'une quelconque des revendications à 3.

12. Alliages polymères contenant au moins un composé selon l'une quelconque des revendications 1 à 3 et au moins un autre polymère.

13. Membranes contenant au moins un composé selon l'une quelconque des revendications 1 à 3 ou au moins un alliage polymère selon la revendication 12.

14. Utilisation d'une membrane selon la revendication 13 dans des piles à combustible ou en tant que membranes pour la technologie de séparation.

15. Utilisation selon la revendication 14, **caractérisée en ce que** les membranes sont des membranes perméables sélectives dans le dessalage de l'eau, la purification d'eaux usées, la dialyse, ainsi que dans l'extraction et la rétention d'ions.

16. Utilisation d'au moins un composé selon l'une quelconque des revendications 1 à 3 ou d'un alliage polymère selon la revendication 12 dans des piles à combustible.

17. Pile à combustible contenant au moins un composé selon l'une quelconque des revendications 1 à 3 ou au moins un alliage polymère selon la revendication 12.
